# EUROPEAN PATENT APPLICATION

(11) **EP 4 394 680 A1**
(43) Date of publication of application: **03.07.2024**
(21) Application number: 23220333.1
(22) Date of filing: 27.12.2023
(51) Int. Cl.: G06Q 10/10, G06Q 10/101, G06Q 10/1093, G06Q 10/0631, G06F 3/04883, H04N 7/15

(54) **CONFIGURABLE VIRTUAL WHITEBOARD GRAPHICAL USER INTERFACE TO AUTOMATICALLY PERFORM A USER ACTION**

(30) Priority: 29.12.2022 US 202263435972 P; 30.03.2023 US 202318128320; 30.03.2023 US 202318128346
(71) Applicant: Atlassian Pty Ltd, Sydney, New South Wales 2000 (AU); Atlassian Inc., San Francisco, CA 94104 (US)
(72) Inventor: KISHORE, Abhinav, San Francisco, 94104 (US); KATAHANAS, Jonathan George, San Francisco, 94104 (US); KONECNY, Matej, San Francisco, 94104 (US); JOHNSON, Natalie Kate, San Francisco, 94104 (US); OATES, Michael, San Francisco, 94104 (US); ALANT, Cornelis Jacobus, San Francisco, 94104 (US); RISTEVSKI, Christina, San Francisco, 94104 (US)
(74) Representative: Rooney, John-Paul

(57) **Abstract**

A computer-implemented method is disclosed. The method includes designating an area (202, 204) in a virtual whiteboard graphical user interface (200a) configured to receive a graphical element (206, 208, 210, 212) of a plurality graphical elements by dragging the graphical element (206, 208, 210, 212) to the designated area (202, 204) from other areas of a virtual whiteboard graphical user interface (200a). The method includes extracting content of the graphical element (206, 208, 210, 212) dragged into the designated area (202, 204), and identifying an action to be performed on the issue tracking platform (122). The method includes displaying an interface window (220) including a preview of the action to be performed, and in response to receiving a confirmation input, generating an application programming interface (API) command including at least a portion of the extracted content and an API action to be performed.

## Description

### FIELD

The described embodiments relate to systems and methods for collaboration among a group of users using a virtual whiteboard graphical user interface. In particular, the present embodiments relate to a configurable virtual whiteboard graphical user interface in which various user actions are performed with respect to a third-party system based on a participant user's action on the virtual whiteboard graphical user interface.

### BACKGROUND

Modern enterprises and collaboration platforms typically enable a group of users to collaborate with each other, for example, using electronic documents or other shared media. However, such structured media can make it difficult to collaborate with multiple users concurrently or in a shared session. The systems and techniques described herein may be used to define a contemporaneous electronic collaboration system that can interface with other applications or platforms.

### SUMMARY

The embodiments and examples described herein are directed to computer systems and computer-implemented methods for enabling collaboration among a group of users in a whiteboarding session using a virtual whiteboard graphical user interface. As described herein, the system may include a backend configured to provide or enable collaboration among the group of users using a virtual whiteboard graphical user interface, which is displayed on a client device of each participant user of a group of users during a whiteboarding session, and perform a particular action on a third-party system in accordance with a received user input and/or a user action performed on the virtual whiteboard graphical user interface. The third-party system, for example, may be an issue tracking platform, or a content management system. The particular action performed on the third-party system may include, for example, creating a new issue on the issue tracking platform, searching the issue tracking platform according to search criteria, updating a status of an issue managed by the issue tracking platform, creating a new content item on the content management system, searching the content management system according to search criteria, and so on.

In one embodiment, a computer-implemented method for generating automated actions in a virtual whiteboard graphical user interface of a content collaboration platform is disclosed. The method includes causing display of the virtual whiteboard graphical user interface including a collaboration region including a set of user-defined graphical elements containing user-generated content. The set of user-defined graphical elements is generated in response to input received from multiple users participating in a whiteboarding session. The method includes receiving a first user input from a first user of the multiple users designating a user-defined action region within the collaboration region. The user-defined action region is associated with an issue tracking platform that is distinct form the content collaboration platform. The method includes receiving a second user input from the first user assigning an action to the action region, and a third user input from the first user selecting a graphical element of a plurality of graphical elements positioned within the collaboration region and dragging the graphical element into the user-defined action region. The method includes extracting content from the graphical element in response to the graphical element being placed within the user-defined action region. The method includes generating a proposed action to be performed with respect to the issue tracking platform and causing display of an interface window including a preview of the proposed action. The method includes, in response to a confirmation input, generating an application programming interface (API) command including at least a portion of the extracted content and an API action corresponding to the action assigned to the action region, and causing the API command to be processed by the issue tracking platform.

In another embodiment, a computer-implemented method for generating automated actions in a virtual whiteboard graphical user interface of a content collaboration platform is disclosed. The method includes causing display of the virtual whiteboard graphical user interface including a collaboration region including a set of user-defined graphical elements containing user-generated content. The set of user-defined graphical elements is generated in response to input received from multiple users participating in a whiteboarding session. The method includes receiving a first user input from a first user of the multiple users designating an action region within the collaboration region. The action region is associated with an issue tracking platform that is distinct form the content collaboration platform. The method includes receiving a second user input from the first user selecting a graphical element of a plurality of graphical elements positioned within the collaboration region and dragging the graphical element into the action region. The method includes extracting content from the graphical element in response to the graphical element being placed within the action region. The method includes causing display of an interface window including a preview of the extracted content. The method includes, in response to a confirmation input, generating an application programming interface (API) command including at least a portion of the extracted content, and an API action corresponding to the action associated with the action region, and causing the API command to be processed by the issue tracking platform.

In yet another embodiment, a computer-implemented method for generating automated actions in a virtual whiteboard graphical user interface of a content collaboration platform is disclosed. The method includes causing display of the virtual whiteboard graphical user interface including a collaboration region including a set of user-defined graphical elements containing user-generated content. The set of user-defined graphical elements is generated in response to input received from multiple users participating in a whiteboarding session. The method includes receiving a first user input from a first user of the multiple users designating a user-defined action region within the collaboration region. The user-defined action region associated with a content management service of the content collaboration platform. The method includes receiving a second user input from the first user assigning an action to the action region, and a third user input from the first user selecting a graphical element of a plurality of graphical elements positioned within the collaboration region and dragging the graphical element into the user-defined action region. The method includes extracting content from the graphical element in response to the graphical element being placed within the user-defined action region and generating a proposed action to be performed with respect to the content management service. The method includes causing display of an interface window including a preview of the proposed action, and in response to a confirmation input, performing the action assigned to the action region.

### BRIEF DESCRIPTION OF THE DRAWINGS

Reference will now be made to representative embodiments illustrated in the accompanying figures. It should be understood that the following descriptions are not intended to limit this disclosure to one included embodiment. To the contrary, the disclosure provided herein is intended to cover alternatives, modifications, and equivalents as may be included within the spirit and scope of the described embodiments, and as defined by the appended claims.
FIG. 1 depicts a system for collaboration among a group of users in accordance with the embodiments described herein.
FIGs. 2A-2E depict example views of a virtual whiteboard graphical collaboration interface, in accordance with some embodiments.
FIGs. 3A-3B depict example views of a virtual whiteboard graphical collaboration interface, in accordance with some embodiments.
FIG. 4 depicts a first example flow chart of a process for collaboration among the group of users using a virtual whiteboard graphical collaboration interface, in accordance with some embodiments.
FIG. 5 depicts a second example flow chart of a process for collaboration among the group of users using a virtual whiteboard graphical collaboration interface, in accordance with some embodiments.
FIG. 6 depicts a third example flow chart of a process for collaboration among the group of users using a virtual whiteboard graphical collaboration interface, in accordance with some embodiments.
FIG. 7 depicts an example hardware for devices of the systems described herein.

The use of the same or similar reference numerals in different figures indicates similar, related, or identical items.

Additionally, it should be understood that the proportions and dimensions (either relative or absolute) of the various features and elements (and collections and groupings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

### DETAILED DESCRIPTION

The systems and techniques described herein are directed to improvement of a virtual whiteboard graphical collaboration interface during a whiteboarding session among a group of users. The virtual whiteboard graphical user interface may provide a virtual board during a whiteboarding session, which may be an online or a virtual whiteboarding session, to share ideas, notes, tasks to be completed or assigned as discussed during the whiteboarding session.

In particular, the systems and techniques described herein may be applicable to a content collaboration platform, which may also be used as a conferencing platform and provides a virtual audiovisual meeting functionality to a group of users. Participant users of the whiteboarding session may create graphical elements, which may be referred herein as user-defined graphical elements including user-generated content. By way of an example, the user-defined graphical elements may be similar to sticky notes, a participant user may generate and place a user-defined graphical element on the virtual whiteboard graphical user interface in a collaboration region. Instead of a participant user taking notes of the whiteboarding session to perform actions as mentioned in the user-defined graphical elements for execution at a later time, the virtual whiteboard graphical user interface is improved to perform actions as mentioned in the user-defined graphical elements automatically when a graphical element is moved into an action region of the virtual whiteboard graphical user interface. Additionally, or alternatively, the action region of the virtual whiteboard graphical user interface may be preconfigured to perform a particular action when a user-defined graphical element is moved or dragged into the action region.

As described herein, in accordance with some embodiments, the action to be performed is automatically determined, and executed on systems like an issue tracking platform, a content management system, and so on. Accordingly, the embodiments described in the present disclosure provides substantial improvement to a virtual whiteboard graphical user interface and a content collaboration platform, while improving efficiency of its users.

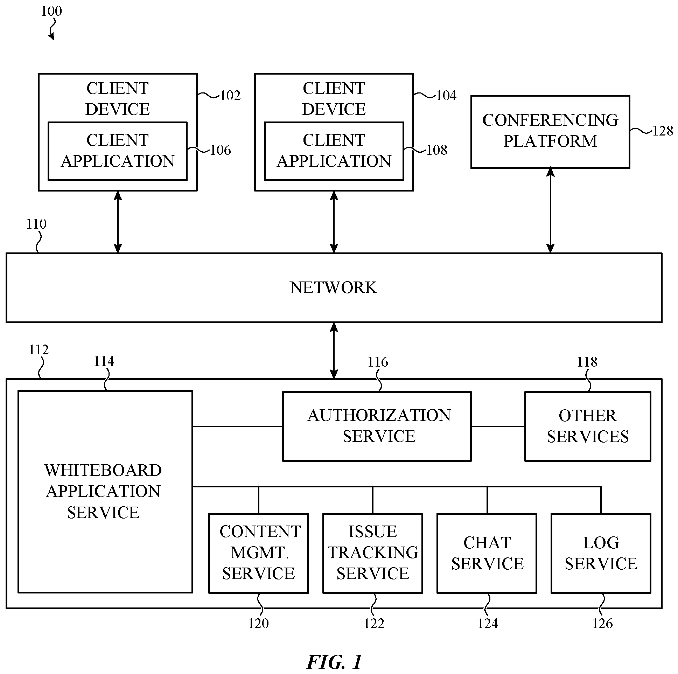

These foregoing and other embodiments are discussed below with reference to FIGs. 1, 2A-2E, 3A-3B, 4, 5, and 6. However, those skilled in the art will readily appreciate that the detailed description given herein with respect to these figures is for explanation only and should not be construed as limiting.

FIG. 1 depicts a simplified diagram of a content collaboration system, as described herein. A content collaboration system 100 is depicted as implemented in a client-server architecture or client-service architecture, but it may be appreciated that this is merely one example and that other communications architectures are possible. In accordance with the examples provide herein, the collaboration system 100 of FIG. 1 can be used for collaboration among a group of users using a virtual whiteboard graphical user interface, and executing an action with respect to a third-party system, such as an issue tracking platform, a content management system, and so on, via a computer network.

An architecture of the collaboration system 100 may allow participant users of a whiteboarding session to share their ideas with other users, create one or more actions to be performed with respect to an issue being managed by an issue tracking platform, or a content item being managed by a content management system, and automatically cause execution of one or more actions with respect to the issue tracking platform and/or the content management system. By way of a non-limiting example, an automatic execution of the one or more actions with respect to the issue tracking platform and/or the content management system is performed as a participant user drags a graphical element from a collaboration region where the graphical element is currently placed by the participant user to an action region, which may be a user-defined action region, of the virtual whiteboard graphical user interface displayed on the participant user's client device.

The networked computer system or the content collaboration system 100 of FIG. 1 depicts an example configuration in which multiple client devices 102, and 104 may access a host server 112 of a set of host servers via a computer network 110. The host server 112 may be referred herein as a collaboration platform server 112. The computer network 110 may include a distributed network which may include local networks, gateways, and networking services provided by one or more internet service providers. The client devices 102, and 104 are able to collaborate with each other and other users using a conferencing platform 128, and the collaboration platform server 112 providing a whiteboarding application service 114. Even though, in the content collaboration system 100, a separate conferencing platform 128 is shown, which may provide audio, video, and/or audiovisual conferencing service, including scheduling of a whiteboarding session and/or scheduling of an online conference or meeting, initiating and/or terminating the whiteboarding session, the online conference or meeting, recording of the whiteboarding session, and/or recording of the online conference or meeting, etc., to participant users. In some embodiments, a service executing on the collaboration platform server 112 may also provide the same functionalities to the participant users, and thus a separate conferencing platform 128 may not be required.

The whiteboarding application service 114 may display a virtual board in a virtual whiteboard graphical user interface displayed on a display of each of the client devices 102, and 104, and a participant user can collaborate using the whiteboarding application service 114 via the network 110 either directly or through the other services by the collaboration platform server 112. Accordingly, the collaboration platform server 112 of the set of host servers may include multiple platform services, which may be part of the content collaboration system 100. For example, the multiple platform services may include, but not limited to, a content management service 120, an issue tracking service 122, a chat service 124, a logging service 126, an authorization service 116, and other services 118, and so on. A platform service of the multiple platform services may be implemented as one or more instances of the platform service executing on one or more host servers of the set of host servers. The multiple platform services may also provide different services including, for example, issue tracking services for creating, managing, and tracking issues for software development, bug tracking, content management services for creating, managing, and searching content items, and/or information technology service management (ITSM) services.

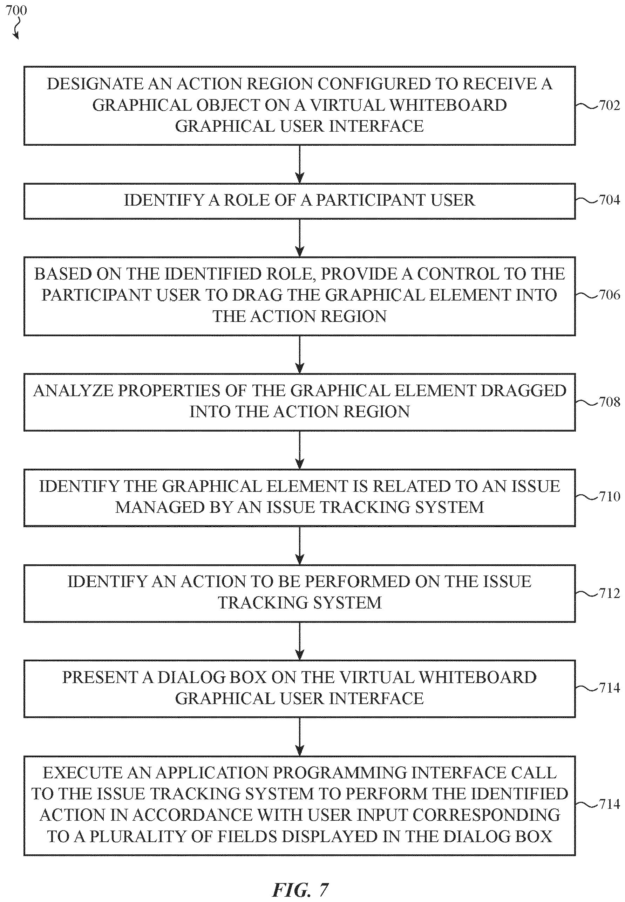

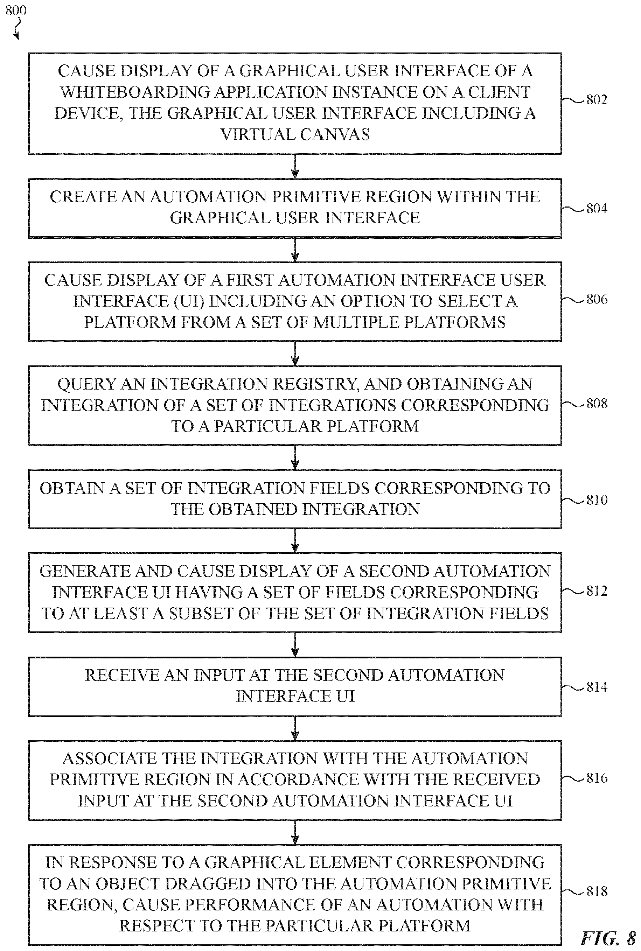

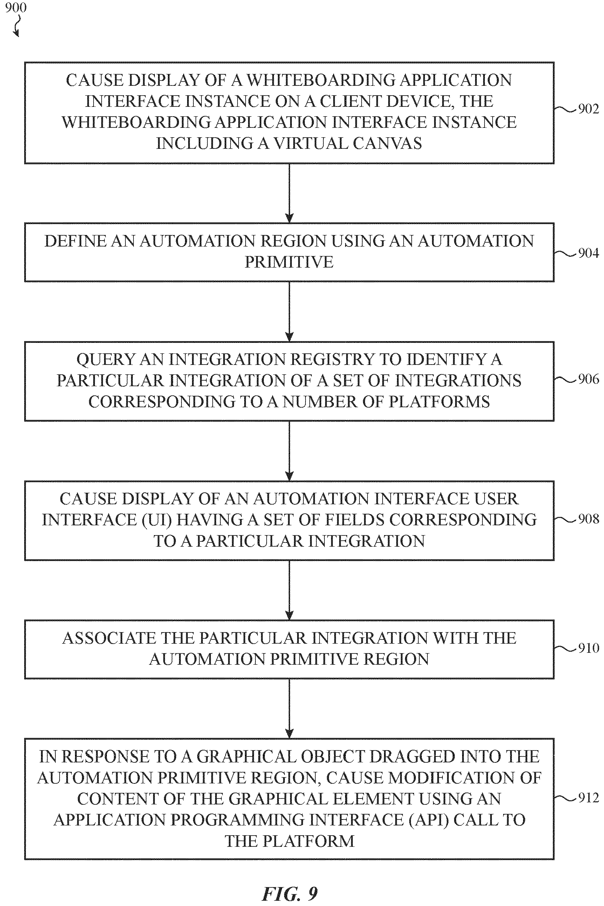

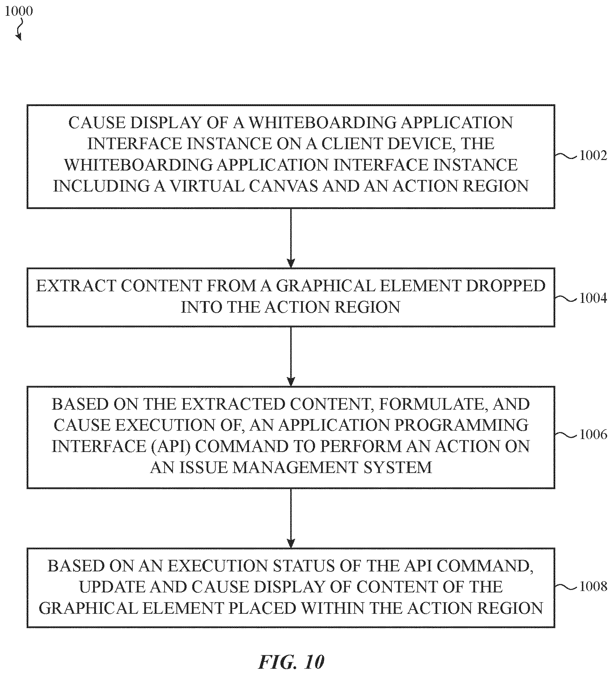

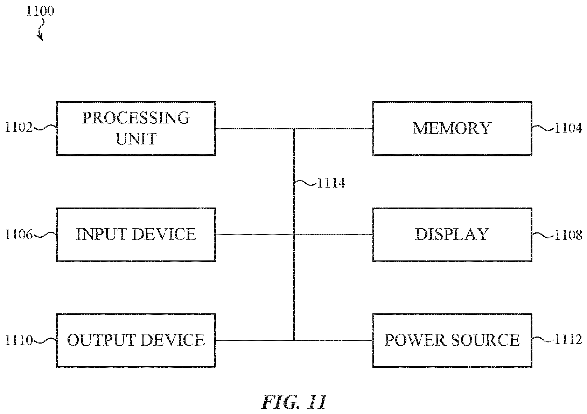

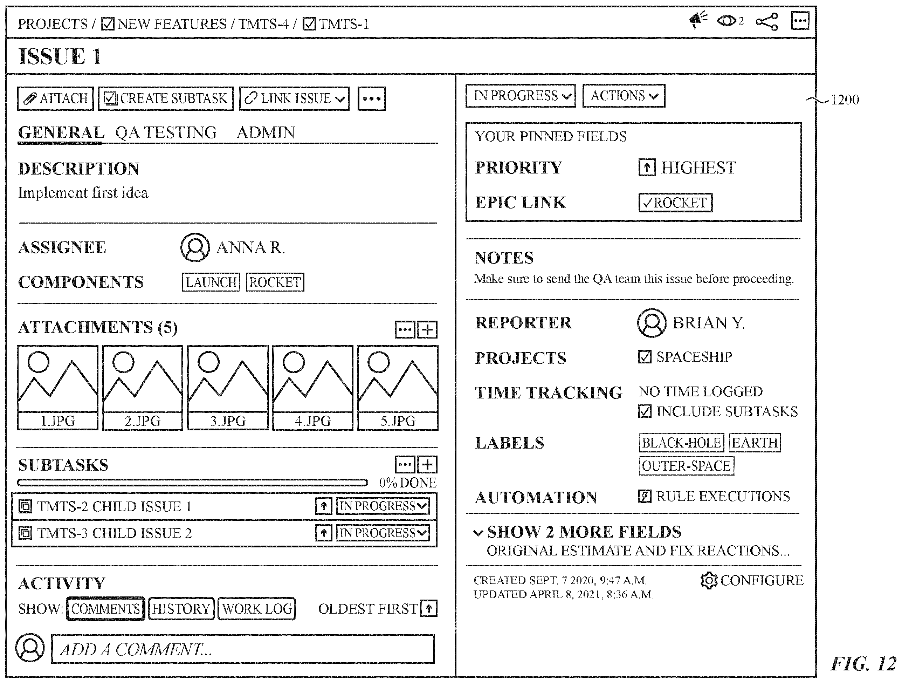

The client devices 102, 104 execute or operate respective example client applications 106, 108, which may include a dedicated client-side application or may be a web browser client application. The client applications 106, 108 may also be referred to herein as frontend applications and may provide one or more graphical user interfaces, for example, virtual whiteboard graphical user interfaces, for interfacing with the backend applications or services provided by the host server 112. The client devices 102, 104 typically include at least one display, at least one processing unit, at least one computer memory, and other hardware components. An example device including hardware elements is described below with respect to FIG. 7.

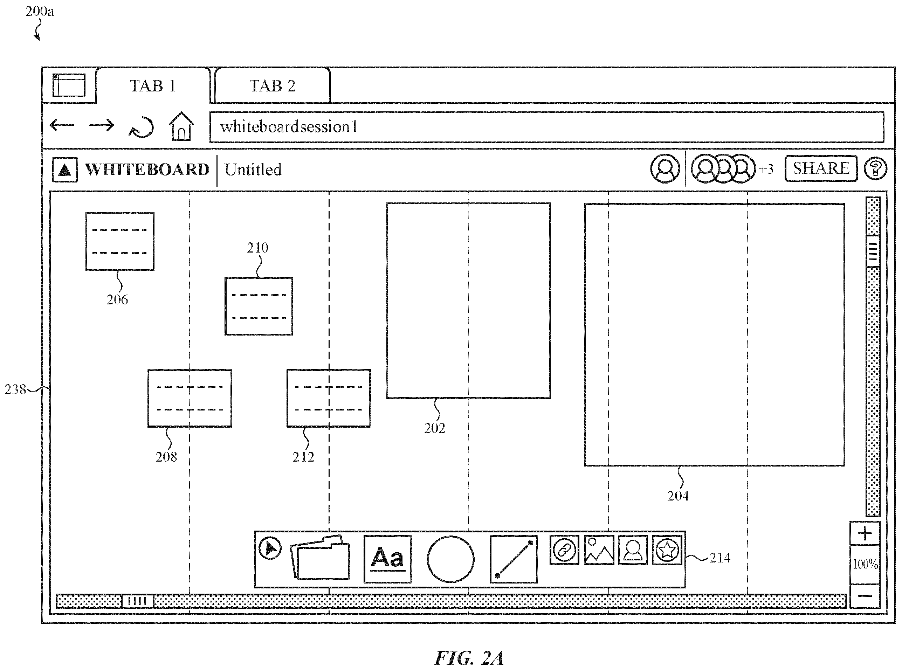

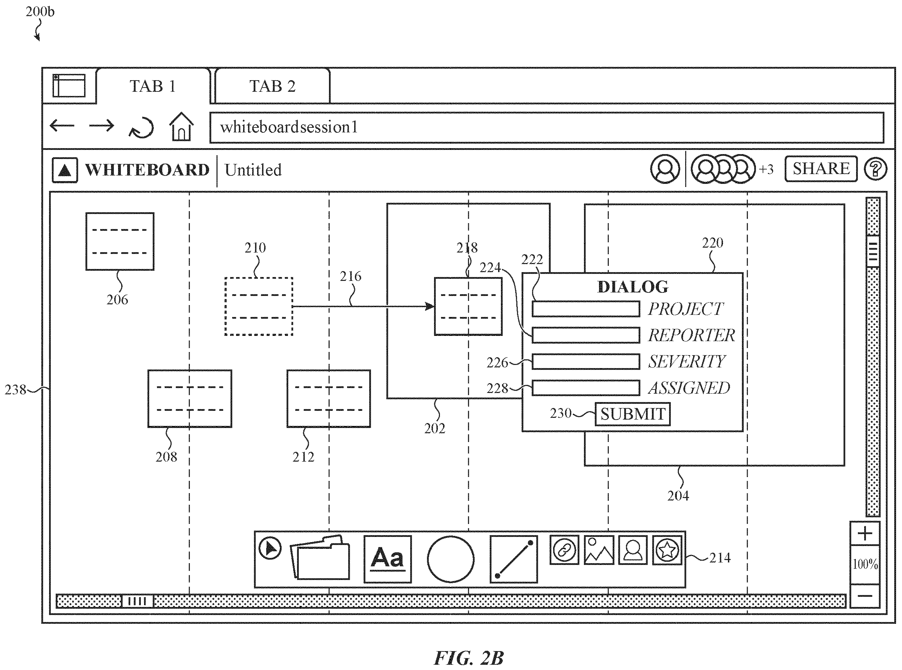

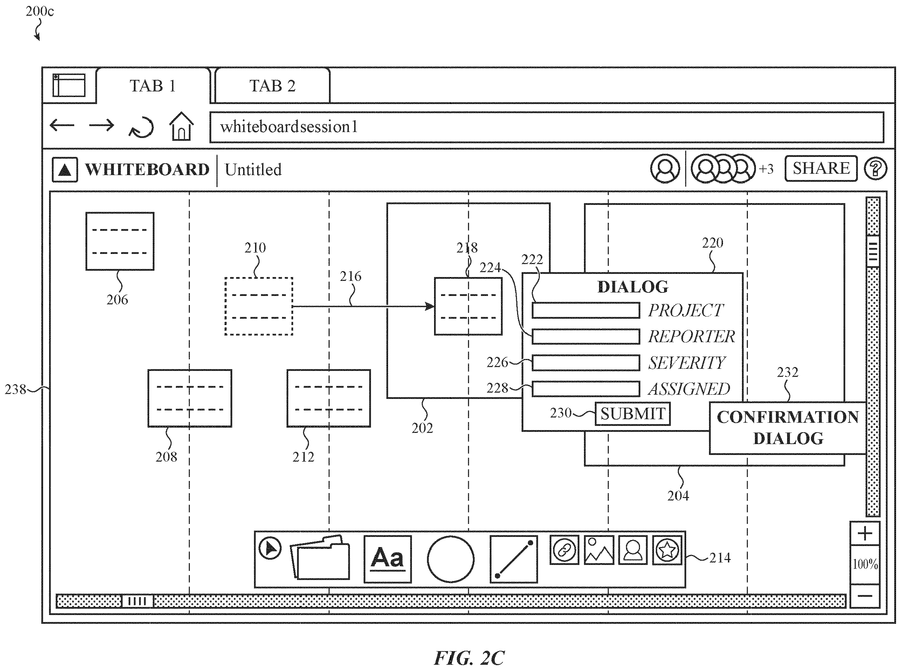

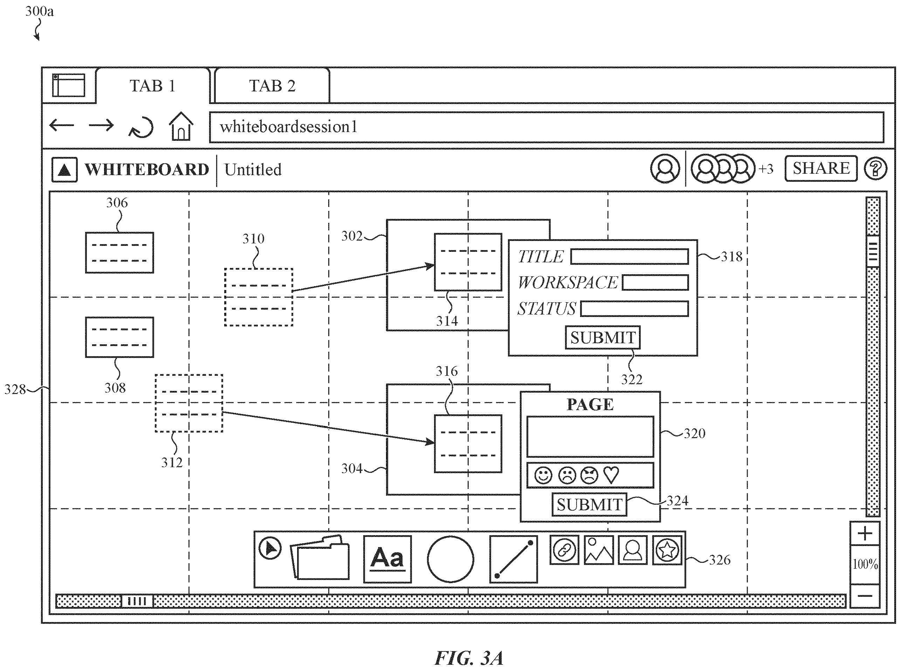

The frontend applications 106, 108 executing on the client devices 102, 104, respectively, may display a virtual whiteboard graphical user interface according to example views shown in FIGs. 2A-2E, and 3A-3B, and as discussed below. A participant user can create a graphical element (also referred herein as a user-defined graphical element), having properties, for example, a text and/or an icon, on the virtual whiteboard graphical user interface using the whiteboarding application service 114 during a whiteboarding session. Each graphical element may further have properties including a shape, a size, and/or a color in which the graphical element is displayed on the virtual whiteboard graphical user interface on the client devices 102, and 104. The properties of the graphical element may be visible properties to participant users of the whiteboarding session.

In some embodiments, and by way of a non-limiting example, properties of each graphical element may uniquely identify a participant user who created the graphical element. Additionally, or alternatively, the properties of the graphical element may uniquely identify whether the graphical element corresponds to a graphical element associated with an issue managed by an issue tracking platform, or a graphical element associated with a content item managed by a content management system. For example, graphical elements created by a participant user User-A may each be of red color, while graphical elements created by a participant user User-B may each be of blue color, or graphical elements associated with an issue managed by an issue tracking platform may be of a square shape and graphical elements associated with a content item managed by a content management system may be of a rectangle shape.

A participant user of the whiteboarding session and/or a host of the whiteboarding session may configure properties of the graphical element, for example, the shape, the size, and the color for each graphical element, according to various criteria as described herein. The participant user of the whiteboarding session and/or the host of the whiteboarding session may also designate one or more action regions on the virtual whiteboard graphical user interface, and configure rules to perform one or more actions when a participant user of the whiteboarding session moves a graphical element into an action region of the one or more action regions. An action region, as described herein, may be a user-defined action region, or a pre-defined action region that is added by a participant user or a host user of the whiteboarding session for display on the virtual whiteboard graphical user interface. Properties of the pre-defined action region may be preconfigured and may not be updated by the participant user or the host user of the whiteboarding session. However, properties of the user-defined action region may be dynamically updated by the participant user or the host user of the whiteboarding session. The action region is displayed on the virtual whiteboard graphical user interface as distinct from the collaboration region displayed on the virtual whiteboard graphical user interface.

Accordingly, participant users can collaborate using a virtual whiteboard, which is presented on a display of each client device as a virtual whiteboard graphical user interface, and automatically cause execution of an action according to the configured rules of an action region, when a participant user places a graphical element into the action region of the virtual whiteboard graphical user interface. The participant user may place the graphical element into the action region by dragging the graphical element from its current location in the collaboration region on the virtual whiteboard graphical user interface to any place within the action region on the virtual whiteboard graphical user interface. Additionally, or alternatively, the participant user may edit properties of the graphical element corresponding to a display location of the graphical element on the virtual whiteboard graphical user interface to move the graphical element from the collaboration region into the action region.

In some embodiments, and by way of a non-limiting example, the rules to perform one or more actions when a graphical element is moved into an action region may be based on a particular action configured for the action region by a participant user or a host user of the whiteboarding session. For example, a virtual whiteboard graphical user interface may include a first action region and a second action region. The first action region may be configured to open a new issue that is associated with the moved graphical element into the first action region on the issue tracking platform, and the second action region may be configured to set a status of an issue associated with the moved graphical element to a closed state when a graphical element is moved into the second action region. An application programming interface call to an issue tracking platform, using the issue tracking service 122, may be made to perform the configured action corresponding to an action region on the issue tracking platform.

Additionally, or alternatively, an action to be performed when a graphical element is moved or dragged into an action region may be determined based on parsing text and/or icons displayed corresponding to the graphical element. The parsed text and/or icons then may be compared using the parsed text and/or icon as a key to a list of key-value pairs, where an action to be performed is identified as a value of the key-value pair. For example, the parsed text may include "new issue" and the list of key-value pairs may include an entry ("new issue", "create a new issue in an issue tracking platform"). Accordingly, when a graphical element including text, for example, "new issue," is moved into an action region, an application programming interface call to an issue tracking platform, using the issue tracking service 122, may be made to open a new issue on the issue tracking platform.

In some embodiments, and by way of a non-limiting example, the list of key-value pairs may include ("search issue", "search an issue tracking platform"), ("list issue", "display an issue of the issue tracking platform"), ("change status", "update a status of an issue on the issue tracking platform"), ("new page", "generate a new document on a content management system"), ("feedback", "provide feedback to a document on the content management system"), ("search content", "search the content management system"), and so on. In accordance with the identified action from the list of key-value pairs, remaining parsed text and/or icons may be used for other purposes, such as automatically populating details to perform the identified action.

As shown in FIG. 1, the content collaboration system 100 includes a host server 112 (also referred herein as a collaboration platform server 112) of a set of host servers, which may be a host of multiple platform services. The host server 112, which may use one or more virtual or physical computing resources (collectively referred in many cases as a "cloud platform"). In some cases, the set of host servers can be physically collocated or in other cases, each may be positioned in a geographically unique location.

The host server 112 of the set of host servers can be communicably coupled to one or more client devices by a network 110. Multiple example client devices are shown as the client devices 102, and 104. The host server 112 of the set of host servers may include one or more host services and/or other server components or modules to support infrastructure for one or more backend applications, each of which may be associated with a particular software platform, such as a documentation platform or an issue tracking platform. For example, the host server 112 may host a whiteboarding application service 114, an authorization service 116, a content management service 120, an issue tracking service 122, a chat service 124, and other services 118. The host server 112 may also include a logging service 126. The host server 112 may also have a local cache to store an events history corresponding to each whiteboarding session, which may be used to generate and communicate a report describing various actions performed during the whiteboarding session to participant users of the whiteboarding session. Additionally, or alternatively, a local database, a remote database, and/or a cache (for example, in a cloud environment) may be used to store the event history.

Accordingly, the whiteboarding application service 114 may provide an interface to client devices 102, and 104 to the one or more backend applications, and/or software platforms, such as a content management system or an issue tracking platform during collaboration with other users during a whiteboarding session. The client devices 102, and 104 may be executing a frontend application that consumes services provided by the whiteboarding application service 114 during the whiteboarding session. By way of a non-limiting example, the interface provided by the whiteboarding application service 114 may be webservice based, such as a REpresentational State Transfer (REST) webservice. The electronic documents, pages, or electronic content may be transferred between a client device and a host server using one or more of JavaScript Graphical element Notation (JSON), EXtensible Markup Language (XML), HyperText Markup Language (HTML), and/or a proprietary document format.

In some embodiments, a user may be admitted to a whiteboarding session based on authentication and/or authorization of a user using the authorization service 116. The authorization service 116 may authenticate a user based on user credentials, which may include a username or other user identification, password or pin, biometric data, or other user-identifying information. The user credentials may be stored and tracked using a token, an authentication cookie, or other similar data element. Upon successful authentication/authorization of a user, the whiteboarding application service 114 may retrieve a user profile associated with an authenticated user of a client device. The user profile associated with the user may suggest various permissions of a user for creating, editing, accessing, searching, and/or viewing various electronic documents, pages, electronic content, issues, tickets on the content management system and/or the issue tracking platform. The user profile associated with the user may also identify other details of the user, including but not limited to, a role of a user in an organization, a role of the user during the whiteboarding session, one or more groups to which a user is a member, other users of the one or more groups to which the user is a member, one or more projects related to the user, one or more issues or tickets (managed by the issue tracking platform) the user is assigned to, and so on. The user profile may include, but not limited to, user permission settings or profiles, and user history that may include user logs or event histories, system settings, administrator profile settings, content space settings, and other system profile data associated with the backend applications described herein and associated with the user. Accordingly, the user of the client device may participate and perform various actions with respect to the issue tracking platform and/or the content management system based on the retrieved user profile. The other services 118 described herein may provide a user interface to other applications or services, for example, an audio and/or a video recording of the whiteboarding session.

While the whiteboarding application service 114 is configured to enable collaboration among participant users on a virtual whiteboard displayed as a virtual whiteboard graphical user interface on a display of each client device, the chat service 124 may provide other services related to a chat interface or a messaging interface during the whiteboarding session. The logging service 126 may log various events, messages, alarms, notifications, and so on, for debugging purposes. The logging service 126 may also log properties of a whiteboarding session including, for example, a start time and an end time of the whiteboarding session, a time when each participant user of the whiteboarding session joined and/or left the whiteboarding session, etc., which may be used to generate and communicate a report describing various actions performed during the whiteboarding session to participant users of the whiteboarding session.

The content management service 120 may be a plug-in, a module, a library, an API, and/or a microservice providing interface to a content management system (not shown) managing content items. Alternatively, the content management service 120 may manage content items for the content collaboration platform 100. Using the interface provided by the content management service 120, one or more content items managed by the content management system may be updated, edited, deleted, viewed, and/or searched as described herein in accordance with the parsed text and/or icons of graphical elements, and/or in accordance with an action configured for an action region, as described herein. A new content item or a template for a new content item may also be created on the content management system using the interface provided by the content management service 120. Thereby, a participant user is not required to launch an instance of the content management system web browser application separately to perform operations with respect to one or more content items managed by the content management system during a whiteboarding session.

The issue tracking service 122 may be a plug-in, a module, a library, an API, and/or a microservice providing interface to an issue tracking platform (not shown) managing issues or tickets. Using the interface provided by the issue tracking service 122, one or more issues managed by the issue tracking platform may be updated, edited, deleted, viewed, and/or searched as described herein in accordance with the parsed text and/or icons of graphical elements, and/or in accordance with an action configured for an action region, as described herein. A new issue or a template for a new issue may also be created on the issue tracking platform using the interface provided by the issue tracking service 122. Thereby, a participant user is not required to launch an instance of the issue tracking platform web browser application separately to perform operations with respect to one or more issues managed by the issue tracking platform during a whiteboarding session.

FIGs. 2A-2E depict example views of a virtual whiteboard graphical user interface or a frontend application executing on a client device of a user. As described herein, views 200a-200e shown in FIGs. 2A-2E are views of a virtual whiteboard graphical user interface, which is, for example, a virtual whiteboard, shown on a display of a client device of each participant user of a whiteboarding session. FIGs. 2A-2E describe example views of a virtual whiteboard graphical user interface, which is using services provided by the issue tracking service and the whiteboarding application service along with other services such as an authorization service 116, a chat service 124, a logging service 126, and other services 118.

Using the conferencing platform 128, a whiteboarding session may be scheduled with a number of users as participants of a whiteboarding session. During the whiteboarding session, participant users may be admitted to the whiteboarding session based on their authentication using the authorization service 116. Once a participant user is admitted to the whiteboarding session, a virtual whiteboard graphical user interface 200a may be displayed on a display of a client device of the participant user. The virtual whiteboard graphical user interface 200a may include a collaboration region 238.

A host user of the whiteboarding session or a participant user of the whiteboarding session may designate one or more action regions 202, 204 within the collaboration region 238. A shape, a size, and/or a location (or coordinates) of the one or more action regions 202, 204 on the virtual whiteboard graphical user interface may be configured by the host user or the participant user. The shape, the size, and/or the location (or coordinates) are thus properties of the action regions 202, 204. In some embodiments, each action region of action regions 202, 204 may be created and configured to serve a different purpose and/or to perform a particular action, as described below. In one example, the actions regions 202, 204 within the collaboration region 238 on the virtual whiteboard graphical user interface may thus be configured to perform one or more actions with respect to an issue tracking platform, which is distinct from the content collaboration platform.

Each participant user, depending on their role during the whiteboarding session, may create a set of graphical elements including one or more graphical elements displayed in a view 200a as 206, 208, 210, and/or 212. Since the graphical elements 206, 208, 210, and/or 212 are created by a participant user of the whiteboarding session, the graphical elements 206, 208, 210, and/or 212 may be referred herein as user-defined graphical elements. The user-defined graphical elements may be configurable. In other words, a shape, a size, and/or a color of a graphical element is configurable by the host user or the participant user. For example, a graphical element created by or created for a participant user User-A may have a background of red color, and a graphical element created by or created for a participant user User-B may have a background of blue color. A color of text, and/or a font of text may also be configurable for each participant user and/or for each graphical element by the host user or the participant user. Accordingly, the shape of the graphical element, the size of the graphical element, the background color of the graphical element, text displayed corresponding to the graphical element, the font of the text displayed corresponding to the graphical element, the color of the text displayed corresponding to the graphical element may be properties of the graphical element. Accordingly, a set of graphical elements (or a set of user-defined graphical elements) including one or more graphical elements may be generated based on input from participant users of the whiteboarding session. The set of graphical elements upon generation may be placed in the collaboration region 238 excluding the actions regions 202, 204.

Each user-defined graphical element of the set of user-defined graphical elements may include text. In other words, the user-defined graphical element may thus be a virtual note element including user-generated content such as text. In some embodiments, the text displayed on the user-defined graphical element may be parsed using a natural language processing technique, and/or a machine-learning algorithm. Based on the parsed text, various keywords may be identified. Using the identified keywords, it may be determined that a graphical element (or a virtual note element) corresponds to or is related to an issue managed by an issue tracking platform, and to perform a particular action on the issue tracking platform when the graphical element (or the virtual note element) is moved or dragged into an action region. Additionally, or alternatively, the keywords may also identify one or more of: a description of an issue managed by the issue tracking platform, a title of the issue, an assignee of the issue, a project name associated with the issue, a severity of the issue, and so on. The assignee of the issue may be a name or a user-id of a user to whom the issue is assigned.

An example graphical element 206, 208, 210, or 210 generated by a participant user User-A with a background color of red may be as shown below:

**Table 1: An Example Graphical Element**

| |
|---|
| New Issue |
| Desktop Team |
| Battery Not Charging Critical |
| John |

Based on parsing of text corresponding to the graphical element shown above, various keywords may be identified as "New Issue," "Desktop," "Desktop Team," "Battery Not Charging," "John," and "Critical." Using a machine-learning algorithm, a keyword "New Issue" may be identified as a particular action to be performed on the issue tracking platform, a keyword "Desktop" may be identified as a project name, a keyword "Desktop Team" may be identified as a group or a team to which a new issue is to be assigned. Similarly, a keyword "Battery Not Charging" may be identified as a title of the new issue and/or as a description of the new issue, and "Critical" may be determined to be a severity of the new issue to be created. The parsed text "John" may be identified as an assignee of the issue. Various keywords identified based on parsing of the text included in the user-defined graphical element may thus correspond with various attributes of an issue being managed by the issue tracking platform. The background color of the graphical element may be used to identify a reporter of the new issue, for example, User-A, in this case. However, the background color of the graphical element may be used to identify other properties associated with the new issue as well.

A participant user may generate a number of graphical elements, and the generated graphical elements may be placed and/or displayed in the collaboration region 238 on the virtual whiteboard graphical user interface in an area other than action regions 202, 204. A toolbar panel 214 may be displayed on the virtual whiteboard graphical user interface, for example, in a bottom area of the collaboration region 238 of the virtual whiteboard graphical user interface 200a. The toolbar panel 214 may display options, for examples, corresponding to create a new folder, update font properties, insert a link, insert an image, etc., in a graphical element.

As shown in a view 200b, a participant user of a whiteboarding session may move a graphical element, for example, the graphical element 210, which may be as shown in Table 1 above, by dragging 216 the graphical element 210 to the action region 202, which may be as shown as 218. Additionally, or alternatively, the participant user may move the graphical element 210 by updating location (or coordinates) properties of the graphical element to move the graphical element into the action region 202 as the graphical element 218.

When the graphical element 210 is moved into the action region 202 as the graphical element 218, text corresponding to the graphical element is parsed and various keywords may be identified, as described above. Since the graphical element 218 includes a keyword "New Issue," an action corresponding to the graphical element 218 is interpreted as opening a new issue on an issue tracking platform. Further, other keywords may be identified corresponding to a project to which the new issue pertains, a reporter of the new issue, a severity of the new issue, and a user to whom the new issue is to be assigned. In other words, when a graphical element is moved into an action region, a particular action to be performed on the issue tracking platform may be identified.

The whiteboarding application service 114 may communicate with the issue tracking service 122, and pass data corresponding to the action to be performed on the issue tracking platform, and other relevant information such as the title of the issue, the description of the issue, the project name of the issue, the assignee of the issue, the reporter of the issue, and/or the severity of the issue, etc. The issue tracking service 122 may make an API call to the issue tracking platform and based on the response from the issue tracking platform, the issue tracking service 122 using the whiteboarding application service 114 may cause a dialog box 220 to be displayed on the display of the client device in the virtual whiteboard graphical user interface. The dialog box 220 may be displayed as an overlay or a pop-up window over the virtual whiteboard graphical user interface, for example, the view 200b. Additionally, or alternatively, the dialog box may be displayed in a new tab of the virtual whiteboard graphical user interface. The virtual whiteboard graphical user interface may support more than one tabs, and each tab may correspond to a different virtual board, or a dialog box as discussed above.

The dialog box 220 may include various fields, for example, a project field 222, a reporter field 224, a severity field 226, and/or an assigned to field 228, and so on. The project field 222 may be configured to receive user input as a text input or a user selection from a list of projects for a project to which the new issue is related to. The reporter field 224 may be configured to receive user input as a text input or a user selection from a list of users for a reporter of the new issue. The severity field 226 may be configured to receive user input as a text input or a user selection from a list of severities for a severity of the new issues, and the assigned to field 228 may be configured to receive user input as a text input or a user selection from a list of users to which the new issue is to be assigned. Various fields displayed in the dialog box 220 are for example only, and a more or a less number of fields may be displayed in the dialog box 220. Accordingly, the dialog box 220 may thus be an interface window displaying various user-editable fields for the user to provide input or selection. Additionally, or alternatively, the interface window may display content extracted from parsing text of the graphical element and/or an action to be performed on the issue tracking platform as a preview. The user-editable fields may include, but not limited to, an issue identifier, an assignee of the issue, a reporter of the issue, an issue task, a severity of the issue, a project associated with the issue, a description of the issue, and so on.

The list of projects for the project field, the list of users for the reporter field, the list of users for the assigned to (or assignee) field, and/or the list of severities may be automatically populated based on various criteria, including but not limited to, query results of one or more structured queries performed on the issue tracking platform using keywords identified by parsing the text of the graphical element moved into an action region, a role of the participant user, a number of projects the participant user is currently working or associated with, and/or users in a particular team associated with the project, etc. The list of projects for the project field, the list of users for the reporter field, the list of users for the assignee field, and/or the list of severities may present to the participant user a list of different values to select from, and based on the user selection and/or the user input in text form to various fields of the dialog box, a user may select the submit button 230 to provide a confirmation for creating the new issue based on the user input or user selection provided in the dialog box 220.

In accordance with the user selecting the submit button 230 as a confirmation input, the whiteboarding application service 114 may communicate with the issue tracking service 122, and pass data corresponding to the received user input and/or user selection for the fields shown in the dialog box 220, along with other related data. The issue tracking service 122 may generate an API command to the issue tracking platform. The API command generated by the issue tracking service 122 may include at least a portion of content extracted from the graphical element (or virtual note element) as described above, and an action to be performed on the issue tracking platform. Based on a response to the API command as received from the issue tracking platform, the issue tracking service 122 using the whiteboarding application service 114 may cause display of a confirmation dialog box 232 on the display of the client device in the virtual whiteboard graphical user interface. The confirmation dialog box 232 may be displayed as an overlay or a pop-up window over the virtual whiteboard graphical user interface, for example, the view 200c. Additionally, or alternatively, the confirmation dialog box 232 may be displayed, and the dialog box 220 may be removed from the display. The confirmation dialog box 232 may display a status corresponding to performed action, for example, creating a new issue on the issue tracking platform in this case. So, if a new issue is successfully created, the status may display an ID of a new issue created on the issue tracking platform. In case there is a failure in creating the new issue, an error message and/or an error message code may be displayed in the confirmation dialog box 232.

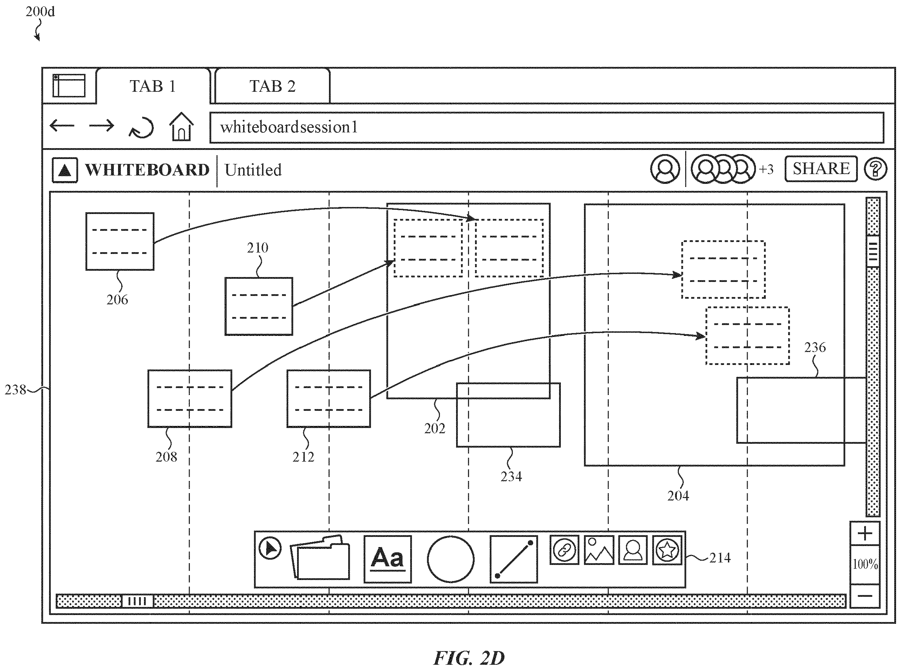

A view 200d of a virtual whiteboard graphical user interface shown in FIG. 2D describes another aspect of the virtual whiteboard graphical user interface. The action regions 202 and 204 each may be configured by a participant user or a host user of a whiteboarding session to perform a specific action when a graphical element is moved into the action region 202 or 204. Additionally, or alternatively, an action to be performed when a graphical element into the action region 202 and/or the action region 204 may be pre-configured and may not be updated by the participant user or the host user of the whiteboarding session.

For example, the action region 202 may be configured to create a new issue based on keywords identified from parsing text of a graphical element moved into the action region 202, and the action region 204 may be configured to perform an issue modification on the issue tracking platform. The issue modification may be performed for an issue that is identified by performing a structured query using keywords identified by parsing text of a graphical element moved into the action region 204. By way of a non-limiting example, the issue modification may be setting a status of an issue to a closed/resolved state. Actions described herein as configured for one or more action regions are for example only, and an action region may be configured to perform any other action on the issue tracking platform.

Further, as shown in the view 200d, a number of graphical elements may be moved together into an action region to perform a batch action corresponding to the moved graphical elements. The batch action may be performed using one or more API commands including content extracted from graphical elements moved into the action region. Accordingly, when graphical elements 206 and 210 are moved into the action region 202, two new issues based on keywords identified corresponding to the graphical elements 206 and 210 may be automatically created as described above, and a confirmation dialog box 234 may be displayed according to a status of the performed batch action of creating new issues. One or more dialog boxes (not shown) may also be displayed prior to performing the batch action to receive a user input or a user selection to perform the batch action.

Similarly, when graphical elements 208 and 212 are moved into the action region 204, issues managed by the issue tracking platform may be identified by generating a structured query using keywords identified by parsing text of a graphical element moved into the action region 204. The generated structured query may be then performed on a datastore of the issue tracking platform to identify one or more issues or one or more issue objects managed by the issue tracking platform corresponding to the structured query. The identified issues or issue objects corresponding to text included in the graphical elements 208 and 212 may be automatically updated to change their state to a closed/resolved state, and a confirmation dialog box 236 may be displayed according to a status of the performed batch action of updating status of issues to a closed state.

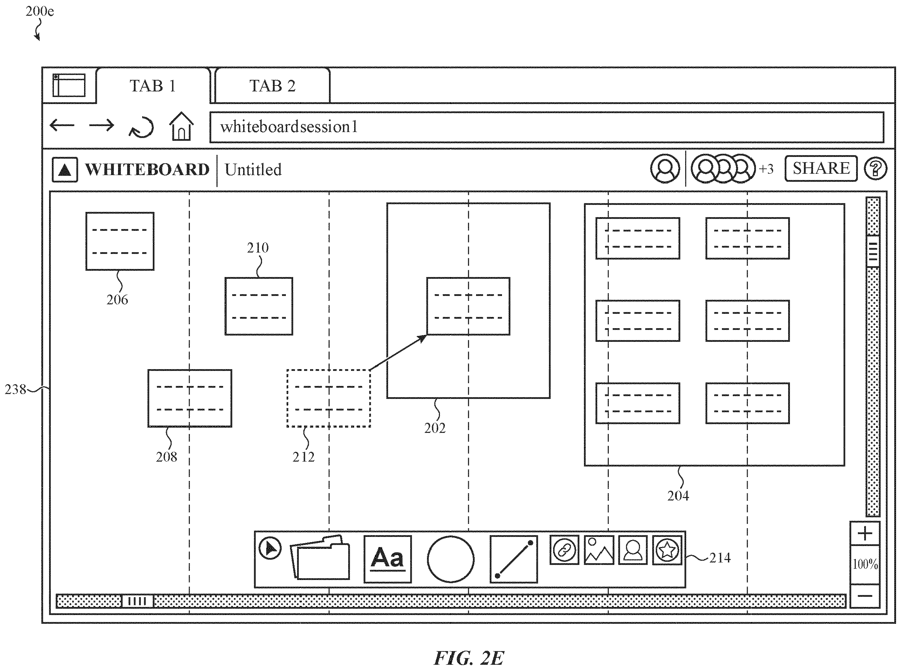

A view 200e of a virtual whiteboard graphical user interface shown in FIG. 2E describes another aspect of the virtual whiteboard graphical user interface. The action region 202 and 204 each may be configured to perform a specific action when a graphical element is moved into the action region 202 or 204. For example, the action region 202 may be configured to perform a specific action, for example, searching an issue tracking platform using one or more keywords identified from parsing text of a graphical element moved into the action region 202 as search criteria. The action region 204 may be configured to display search results from the issue tracking platform in accordance with a search performed on the issue tracking platform by moving a graphical element into the action region 202.

As shown in the view 200e, when a graphical element 212 is moved into the action region 202, a search operation may be performed on the issue tracking platform in accordance with one or more identified keywords as search criteria using the whiteboarding application service 114 and the issue tracking service 122, as described herein. In accordance with the returned search result from the issue tracking platform, a number of graphical elements corresponding to the search result may be displayed in the action region 204. Additionally, or alternatively, a number of graphical elements corresponding to search result may be displayed in an interface window as an overlay or a pop-up window over the virtual whiteboard graphical user interface 200e.

Each graphical element displayed in the action region 204 (or the interface window over the virtual whiteboard graphical user interface) may include a link to an issue managed by the issue tracking platform. Additionally, or alternatively, when a user hovers a mouse or control over a specific area of a graphical element in the action region 204, key fields of the issue corresponding to the graphical element may be displayed as an overlay or a pop-up window on the virtual whiteboard graphical user interface of 200e, and the overlay or the pop-up window is removed from displaying when the mouse or control is moved away from the specific area of the graphical element in the action region 204.

Further each issue in the search result may be ranked and displayed in an order according to their relevancy rank. The relevancy rank may be determined by the issue tracking platform, or by the issue tracking service 122.

The virtual whiteboard graphical user interface shown in FIGs. 2A-2E may be implemented in a web browser client application using HTML, JavaScript, or other web-enabled protocol.

FIGs. 3A-3B depict example views of a virtual whiteboard graphical user interface, in accordance with some embodiments. The virtual whiteboard graphical user interface views 300a and 300b are similar to the virtual whiteboard graphical user interface views 200a-200e; however, graphical elements shown in 300a and 300b correspond with content items managed by a content management service 120 of the content collaboration platform 100. The Examples of graphical elements corresponding to an issue tracking platform and graphical elements corresponding to a content management service is discussed separately using FIGs. 2A-2E and FIGs. 3A-3B for discussion purpose only, and a virtual whiteboard graphical user interface may perform an action with respect to an issue tracking platform and/or a content management service based on the keywords identified from parsing text of a graphical element moved into an action region. Accordingly, embodiments described herein using FIGs. 2A-2E with respect to an issue tracking platform may also be applicable to embodiments described herein using FIGs. 3A-3B for a content management service, and vice versa.

A view 300a of a virtual whiteboard graphical user interface shown in FIG. 3A describes an aspect of the virtual whiteboard graphical user interface similar to described above using FIG. 2D with reference to a content management service. The action region 302 and 304, in the collaboration region 328, each may be configured to perform a specific action when a graphical element, for example, a graphical element 306, 308, 310, or 312, is moved into the action region 302 or 304. For example, the action region 302 may be configured to create a page or a content item based on keywords identified from parsing text corresponding to one or more graphical elements moved into the action region 302, and the action region 304 may be configured to update a content item with feedback based on keywords identified parsing text corresponding to a graphical element moved into the action region 304. The page or content item may be created having a page layout that is determined based on a relative position of each graphical element in the action region 302.

As shown in the view 300a, when a graphical element 310 is moved into the action region 302 as a graphical element 314, keywords may be identified corresponding to the graphical element 314, as described above. As described above with reference to FIGs. 2A-2E, the whiteboarding application service 114 may in this case communicate with the content management service 120, and communicate data corresponding to the action to be performed and other relevant information as identified from the keywords with the content management service. Since the content management service is managing content on the content collaboration platform 100, and thus is not a distinct application or service, as discussed above for an issue tracking platform, the content management service 120 may not need to make an API call to an external content management system. The content management service 120 using the whiteboarding application service 114 may cause a dialog box 318 being displayed on the display of the client device in the virtual whiteboard graphical user interface 300a. The dialog box 318 may include one or more input boxes or fields to receive user input or user selection corresponding to one or more of: an owner (or an author) of a new content item, a title associated with the new content item, a content workspace for the new content item, a status corresponding to the new content item, and so on. Additionally, or alternatively, the dialog box 318 may display an action to be performed.

The owner of the new content item, the title associated with the new content item, the content workspace for the new content item, the status corresponding to the new content item may be automatically populated in the dialog box 318 based on the identified keywords, and/or a user profile of a participant user. A participant user may edit or update a value corresponding to the one or more input boxes before providing a confirmation input using a submit button 322 to create a new page or content item that will be managed by the content management service.

Further, as shown in the view 300a, when a graphical element 312 is moved into the action region 304 as a graphical element 316, keywords may be identified corresponding to graphical element 316, as described above. Since the action region 304 is configured to update a content item with feedback, the whiteboarding application service 114 may in this case communicate with the content management service 120, and communicate data corresponding to the action to be performed, and other relevant information as identified from the keywords. The content management service 120 may cause a dialog box 320 being displayed on the display of the client device in the virtual whiteboard graphical user interface 300a. The dialog box 320 may display a page that is identified by performing a structured query using the keywords as search criteria, and a comment box to receive user input as text, a list of icons or emojis to select for providing user feedback, and/or a list of statuses to update a status corresponding to the content item. A participant user may provide feedback for the content item in the comment box or selecting an icon or emoji from the list of icons or emojis, and/or a new status value selected from the list of statuses or as a text input, before providing a confirmation input using a submit button 324 to update the content item.

A toolbar panel 326 may be displayed on the virtual whiteboard graphical user interface, for example, in a bottom area of the virtual whiteboard graphical user interface 300a. The toolbar panel 326 may display options, for examples, corresponding to create a new folder, update font properties, insert a link, insert an image, etc., in a graphical element.

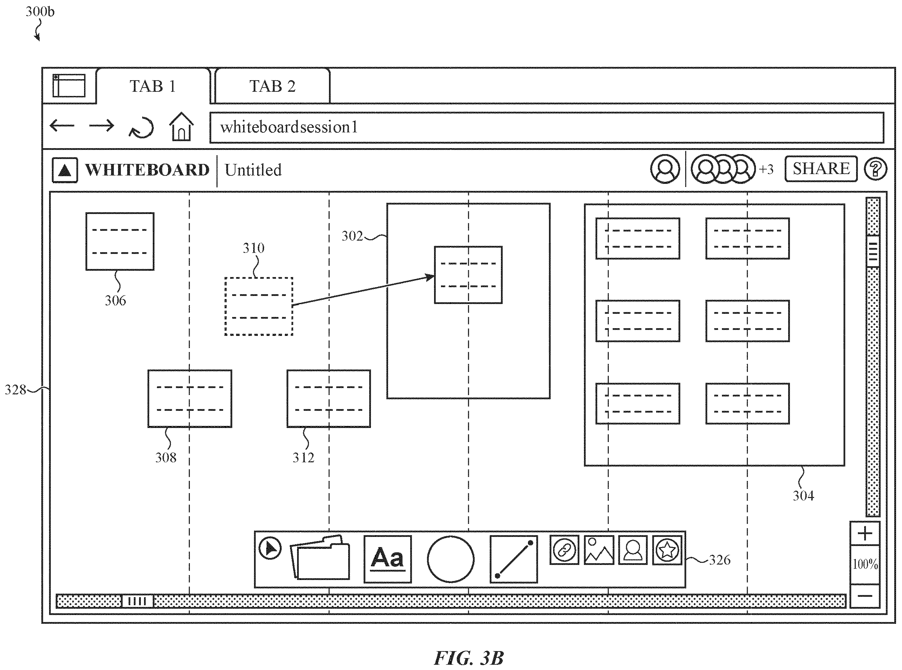

A view 300b of a virtual whiteboard graphical user interface shown in FIG. 3B describes an aspect of the virtual whiteboard graphical user interface similar to described above using FIG. 2E with reference to a content management system. The action regions 302 and 304 each may be configured to perform a specific action when a graphical element is moved into the action region 302 or 304. For example, the action region 302 may be configured to perform a specific action, for example, searching for existing pages or content items matching particular search criteria, or perform an action based on keywords identified from parsing text corresponding to a graphical element moved into the action region 302. The action region 304 may be configured to display search results from the content management system in accordance with a search performed on the content management system by moving a graphical element into the action region 302.

As shown in the view 300b, when a graphical element 310 is moved into the action region 302, a search operation may be performed on the content management system in accordance with one or more identified keywords as search criteria using the whiteboarding application service 114 and the content management service 120, as described herein. In accordance with the returned search result, a number of graphical elements corresponding to the search result may be displayed in the action region 304. Accordingly, each graphical element in the action region 304 may include a link to a content item managed by the content management service. Additionally, or alternatively, when a user hovers a mouse or control over a specific area of a graphical element in the action region 304, key fields of the content item corresponding to the graphical element may be displayed as an overlay or a pop-up window on the virtual whiteboard graphical user interface of 300b, and the overlay or the pop-up window is removed from displaying when the mouse or control is moved away from the specific area of the graphical element in the action region 304.

Further each content item displayed in the search result may be ranked and are displayed in an order according to their relevancy rank. The relevancy rank may be determined by the content management system, or by the content management service 120.

In some embodiments, and by way of a non-limiting example, the action region 302 may be configured to search and identify an existing page or a content item matching particular search criteria and update the identified page using content extracted from the graphical element moved into the action region 302. Alternatively, the action region 302 may be configured to search and identify an existing page or a content item matching particular search criteria and create an action item for the identified existing page or content item based on the content extracted from the graphical element moved into the action region 302. By way of a non-limiting example, the action item may be sending the page or content item to a group of users for review and feedback, etc. Alternatively, the action region 302 may be configured to search and identify an existing page or a content item matching particular search criteria and update a decision for the identified existing page or content item based on the content extracted from the graphical element moved into the action region 302. By way of a non-limiting example, the decision may be approving the page for publication or to make the page available to all users in accordance with one or more access policies.

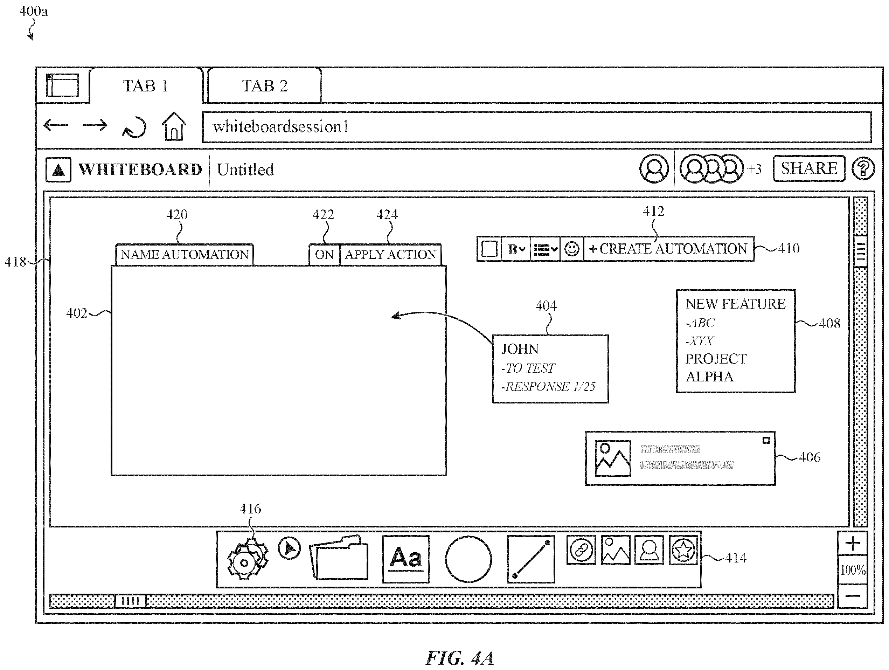

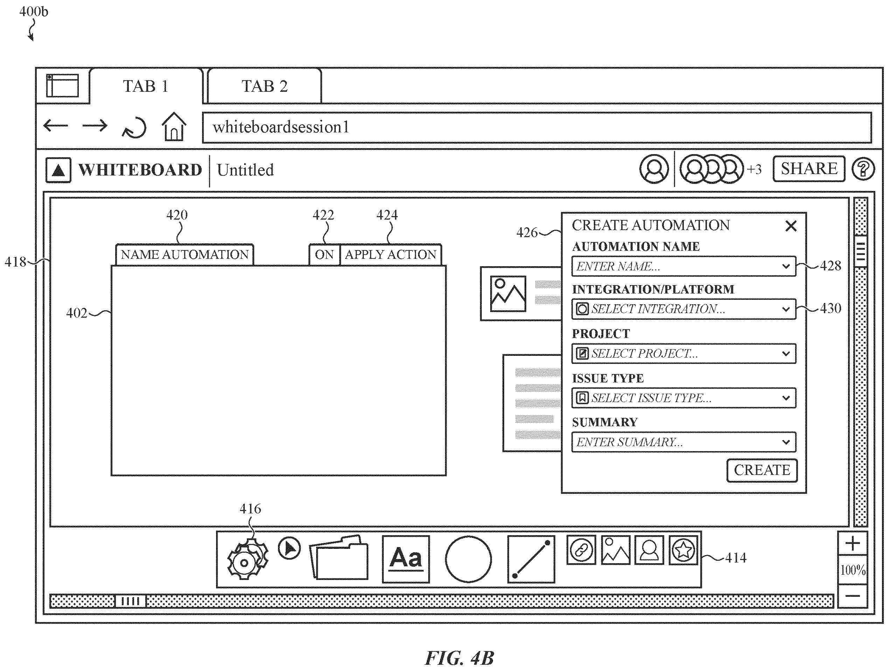

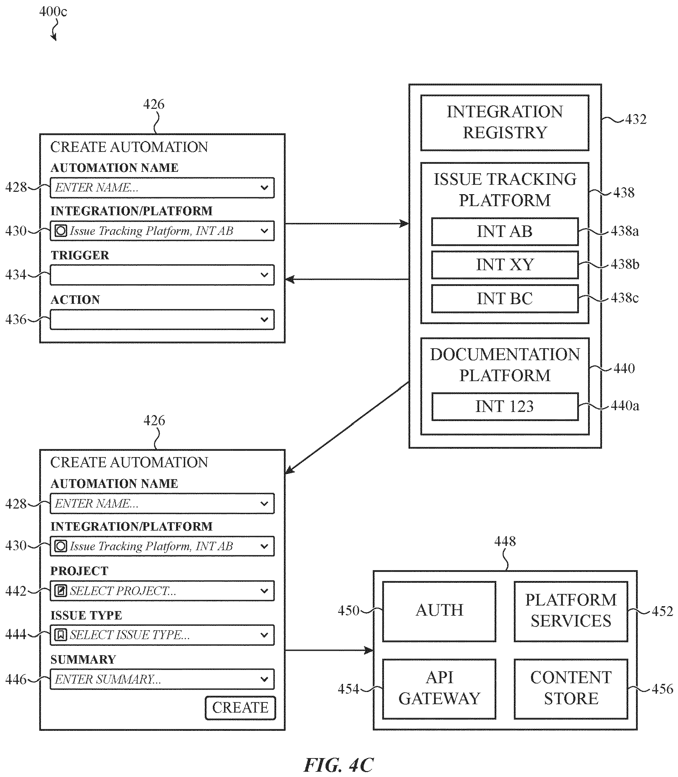

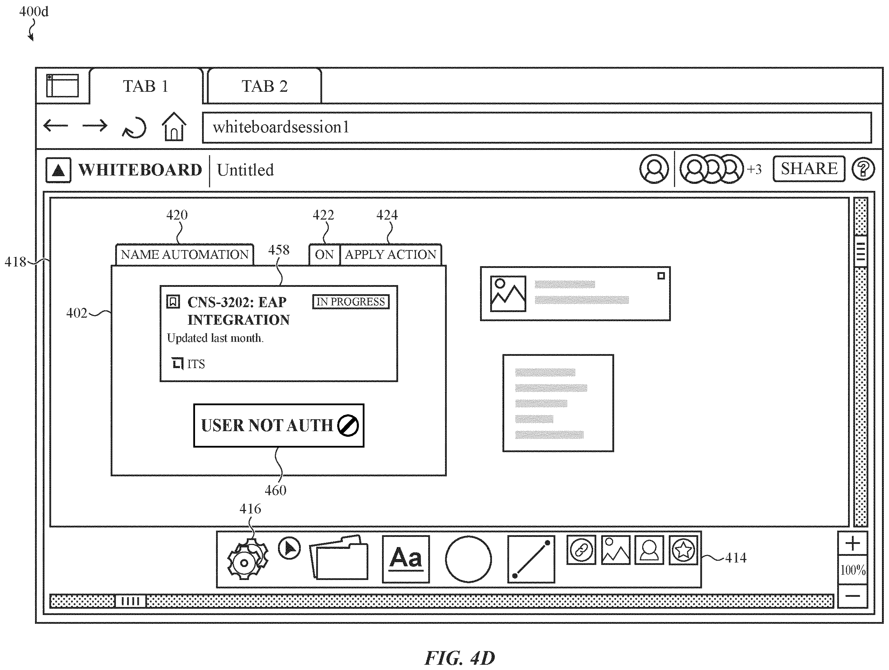

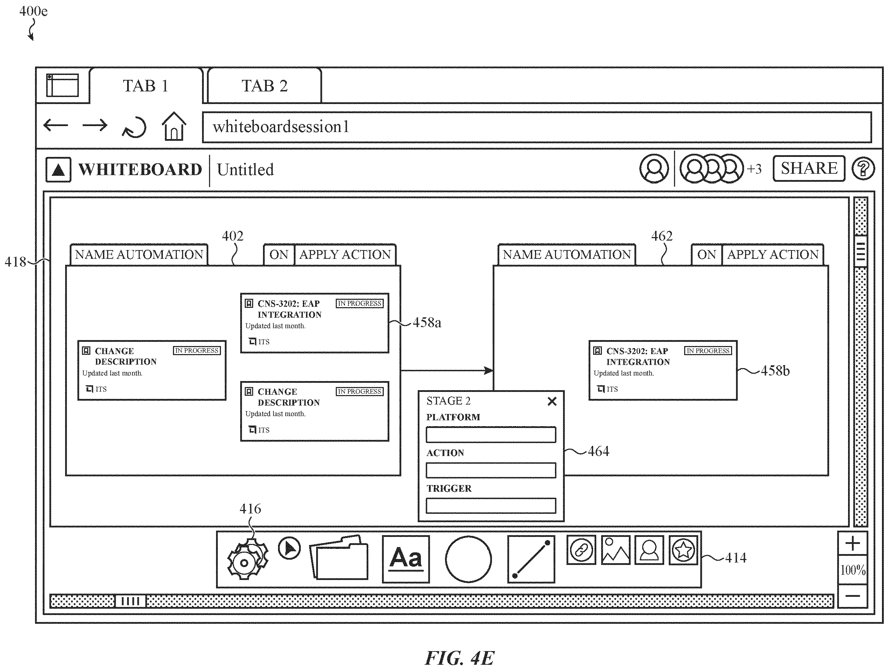

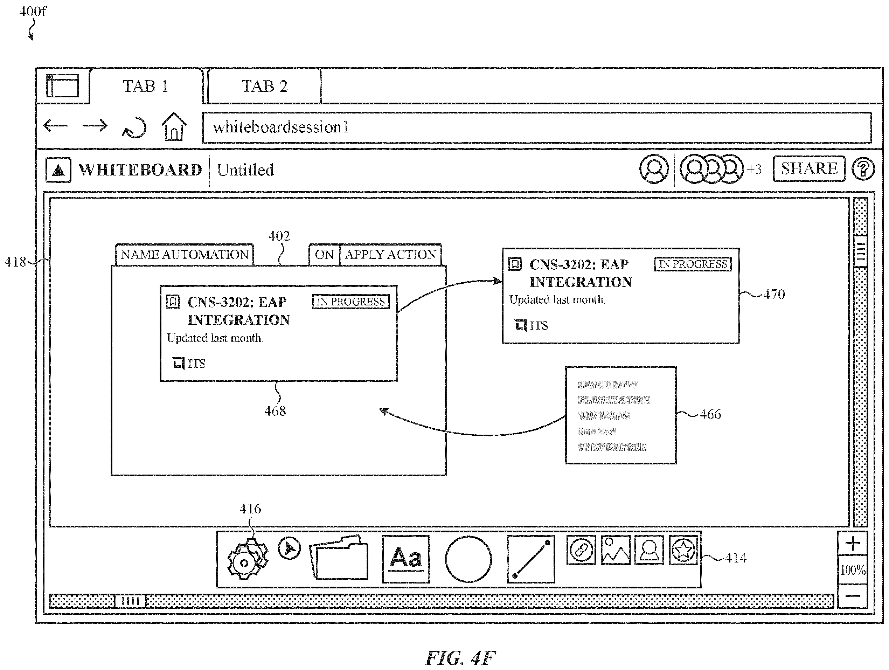

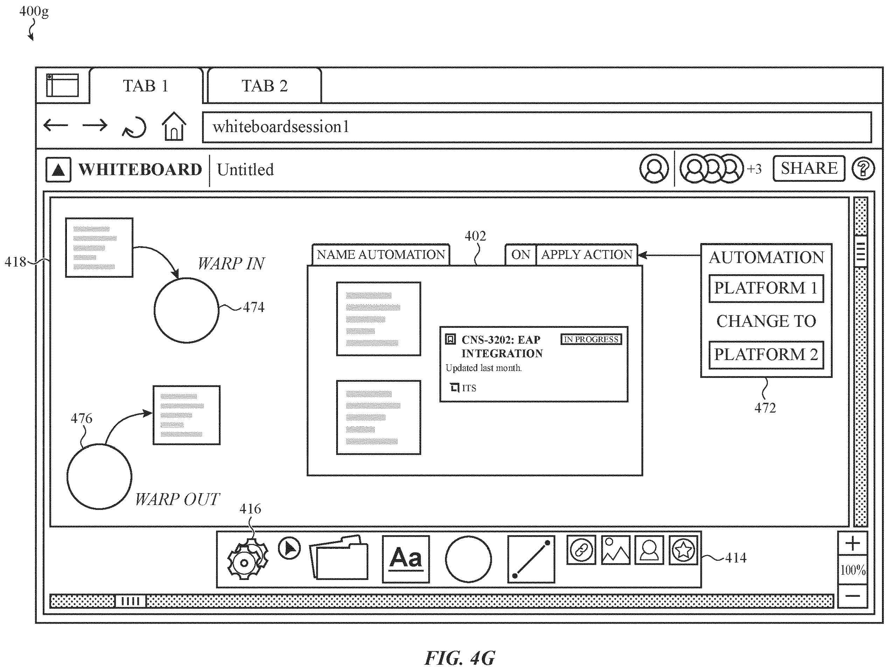

FIG. 4 depicts an example flow chart 400 of a process for collaboration among a group of users using a virtual whiteboard graphical user interface, as described above in accordance with some embodiments. At operation 402, a virtual whiteboard graphical user interface may be displayed on a display of a client of each participant user and/or a host user of a whiteboarding session. The virtual whiteboard graphical user interface may be displayed upon authentication of the participant user of the whiteboarding session and/or the host user of the whiteboarding session using the authorization service 116, as described herein. The virtual whiteboard graphical user interface may include and display a collaboration region. The collaboration region, as described herein, may include a set of graphical elements generated based on an input from one or more participant users of the whiteboarding session. Thus, the set of graphical elements may include user-defined graphical elements including user-generated content.

At operation 404, a first user input designating an action region may be received from a participant user or a host user of the whiteboarding session. The action region may be a user-defined action region. In other words, properties of the action region including a shape, a size, a location of the action region within the collaboration region, and/or an action to be performed when a graphical element is moved into the action region may be determined and configured by the participant user or the host user of the whiteboarding session. Alternatively, the action region may be a preconfigured action region, and the participant user or the host user of the whiteboarding session may cause the action region to be displayed within the collaboration region. The participant user or the host user of the whiteboarding session may not be able to update the properties of the preconfigured action region. By way of a non-limiting example, the action region may be associated with an issue tracking platform distinct from the content collaboration platform, or the action region may be associated with a content management system distinct from the content collaboration platform or a content management service of the content collaboration platform.

Operation 406 is relevant in the case where the action region is a user-defined action region. Accordingly, at operation 406, a participant user or a host user of the whiteboarding session may provide a second user input corresponding to properties of the action region designated at operation 404, including but not limited to, an action to be performed when a graphical element is moved into the action region.

At operation 408, a third input may be received from a participant user or a host user of the whiteboarding session. The third input may correspond with the participant user or the host user of the whiteboarding session selecting a graphical element of a plurality of graphical elements positioned and displayed in the collaboration region to move the selected graphical element into the action region. As described herein, the selected graphical element may be moved into the action region by dragging the selected graphical element from its current location in the collaboration region into the action region or updating properties of the selected graphical element.

At operation 410, in response to the graphical element being placed in the action region, content of the graphical element moved into the action region is extracted using a natural language processing technique and/or a machine learning algorithm. The parsed content may identify various keywords, as described herein, corresponding to various attributes or properties of an issue managed by an issue tracking platform, and/or a content item managed by a content management system or a content management service of the content collaboration platform. The identified keywords from the extracted content of the graphical element may be used as search criteria for performing one or more structured queries on the issue tracking platform, the content management system, and/or the content management service. By way of a non-limiting example, the one or more structured queries may be executed using one or more application programming interface commands.

At operation 412, an interface window may be displayed on the virtual whiteboard graphical user interface. By way of a non-limiting example, the interface window may display an action to be performed in response to the graphical element being moved into the action region at operation 408, and/or the content extracted at operation 410. Accordingly, a participant user or a host user of the whiteboarding session may review content displayed in the interface window, provide user input or user selection with respect to the content displayed in the interface window, and/or a confirmation to perform the action.

At operation 414, in response to receiving a confirmation from a participant user or a host user of the whiteboarding session, an API command may be generated. The generated API command may include at least a portion of the content extracted at operation 410, and an API action. For an action region that is a user-defined action region, the API action may correspond with an action assigned to the action region at operation 406. Otherwise, the API action may correspond with an action associated with the preconfigured action region, or an action as determined based on the content extracted at operation 410.

At operation 416, the API command generated at operation 414 may be executed on the respective issue tracking platform and/or the content management system.

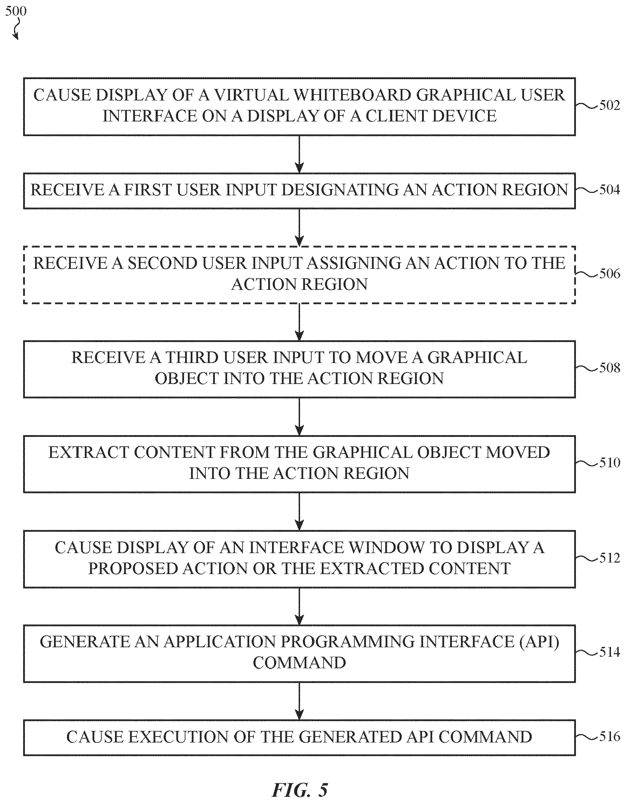

FIG. 5 depicts an example flow chart 500 of a process for collaboration among the group of users using a virtual whiteboard graphical user interface, as described above in accordance with some embodiments. At operation 502, a participant user of a whiteboarding session or a host user of the whiteboarding session may designate an action region configured to receive a graphical element from other areas of the virtual whiteboard graphical user interface. The graphical element may be received in the action region as a result of a user moving or dragging the graphical element from its current location on the virtual whiteboard graphical user interface into the action region. The graphical element may be similar to a graphical element, as described herein using FIGs. 2A-2E, and/or 3A-3B, and the action region may be similar to an action region, as described herein using FIGs. 2A-2E, and/or 3A-3B, for example.

At operation 504, properties of the graphical element that is dragged or moved into the designated area may be analyzed using a natural language processing technique or a machine-learning algorithm. The properties of the graphical element may include text, and the text may be parsed using the natural language processing technique or the machine-learning algorithm to identify various keywords. Based on the keywords identified at the operation 504, at operation 506, the graphical element may be identified as being related to a content item being managed by a content management system and/or a content management service of a content collaboration platform, and at operation 508, an action that is to be performed on the content item may be identified.

At operation 510, a dialog box similar to an interface window, as described herein, may be presented, or displayed on the virtual whiteboard graphical user interface. The presented or displayed dialog box may include a page retrieved from the content management system corresponding to the content item, and in accordance with the properties of the graphical element including but not limited to the identified keywords.

At operation 512, a user input corresponding to one or more input boxes displayed in the dialog box may be received, as described above using FIGs. 3A-3B, in accordance with some embodiments. At operation 514, an API call may be executed to the content management system to perform the identified action associated with the graphical element that is moved into the action region.

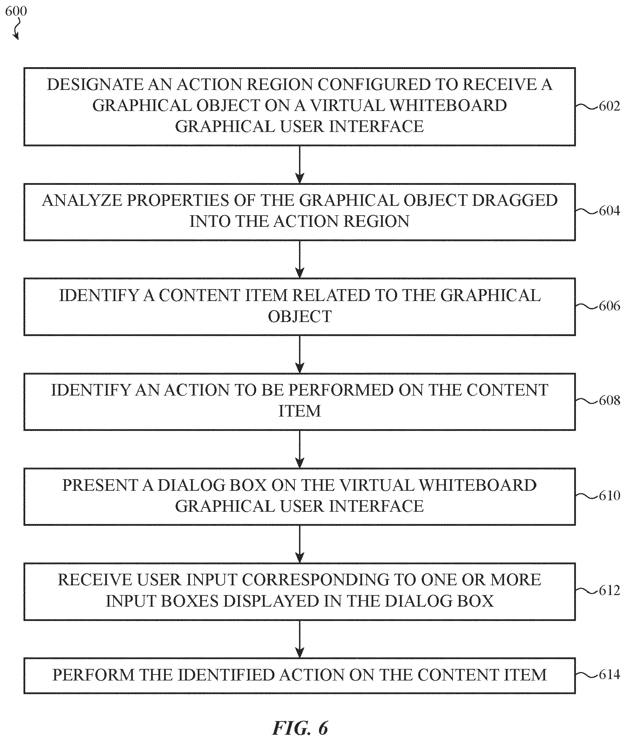

FIG. 6 depicts an example flow chart 600 of a process for collaboration among a group of users using a virtual whiteboard graphical user interface, as described above in accordance with some embodiments. At operation 602, a participant user of a whiteboarding session or a host user of the whiteboarding session may designate an action region configured to receive a graphical element from other areas of the virtual whiteboard graphical user interface. The graphical element may be received in the designated area as a result of a user moving or dragging the graphical element from its current location on the virtual whiteboard graphical user interface into the designated area. The graphical element may be similar to a graphical element, as described herein using FIGs. 2A-2E, and/or 3A-3B, and the designated area may be similar to an action region, as described herein using FIGs. 2A-2E, and/or 3A-3B, for example.

At operation 604, a role of a participant user during a whiteboarding session may be identified based on a user profile associated with the participant user. The user profile may be retrieved based on authentication of the participant user. At operation 606, based on the identified role of the participant user, a control may be provided to the participant user to move or drag a graphical element into an action region.

At operation 608, properties of the graphical element that is dragged or moved into the designated area may be analyzed using a natural language processing technique or a machine-learning algorithm. The properties of the graphical element may include text, and the text may be parsed using the natural language processing technique or the machine-learning algorithm to identify various keywords. Based on the keywords identified at the operation 608, at operation 610, the graphical element may be identified as being related to an issue being managed by an issue tracking platform, and at operation 612, an action that is to be performed on the issue tracking platform may be identified.

At operation 614, a dialog box similar to an interface window, as described herein, may be presented, or displayed on the virtual whiteboard graphical user interface. The presented or displayed dialog box may include a number of fields to receive user input to perform the identified action on the issue tracking platform. At operation 616, in accordance with the received user input, an API call may be executed to the issue tracking platform to perform the identified action associated with the graphical element that is moved into the action region.

A virtual whiteboard graphical user interface described above using FIGs. 2A-2E, and/or 3A-3B is not limited to automatically cause execution of various operations with respect to an issue tracking platform and/or a content management system. There are many different applications that a skilled artisan may develop based on the present disclosure. For example, a graphical element may be related to a song, and by moving a number of graphical elements in the action region, a user can create an album. Songs in the created album may be in an order according to a relative position of various graphical elements in the action region. In another example, a graphical element may be related to a presentation slide or a document portion, and by moving graphical elements into the action region, a presentation based on contribution from various participant users, or a document from contribution from various participant users may be easily created. The generated presentation or document may have a layout that is determined based on a relative position of various graphical elements in the action region.

FIG. 7 shows a sample electrical block diagram of an electronic device 700 that may perform the operations described herein. The electronic device 700 may in some cases take the form of any of the electronic devices described with reference to FIGS. 1, 2A-2E 3A-3B, and 4-6, including client devices, and/or servers or other computing devices associated with the collaboration system 100. The electronic device 700 can include one or more of a processing unit 702, a memory 704 or storage device, input devices 706, a display 708, output devices 710, and a power source 712. In some cases, various implementations of the electronic device 700 may lack some or all of these components and/or include additional or alternative components.

The processing unit 702 can control some or all of the operations of the electronic device 700. The processing unit 702 can communicate, either directly or indirectly, with some or all of the components of the electronic device 700. For example, a system bus or other communication mechanism 714 can provide communication between the processing unit 702, the power source 712, the memory 704, the input device(s) 706, and the output device(s) 710.

The processing unit 702 can be implemented as any electronic device capable of processing, receiving, or transmitting data or instructions. For example, the processing unit 702 can be a microprocessor, a central processing unit (CPU), an application-specific integrated circuit (ASIC), a digital signal processor (DSP), or combinations of such devices. As described herein, the term "processing unit" is meant to encompass a single processor or processing unit, multiple processors, multiple processing units, or other suitably configured computing element or elements.

It should be noted that the components of the electronic device 700 can be controlled by multiple processing units. For example, select components of the electronic device 700 (e.g., an input device 706) may be controlled by a first processing unit and other components of the electronic device 700 (e.g., the display 708) may be controlled by a second processing unit, where the first and second processing units may or may not be in communication with each other.

The power source 712 can be implemented with any device capable of providing energy to the electronic device 700. For example, the power source 712 may be one or more batteries or rechargeable batteries. Additionally, or alternatively, the power source 712 can be a power connector or power cord that connects the electronic device 700 to another power source, such as a wall outlet.

The memory 704 can store electronic data that can be used by the electronic device 700. For example, the memory 704 can store electronic data or content such as, for example, audio and video files, documents and applications, device settings and user preferences, timing signals, control signals, and data structures or databases. The memory 704 can be configured as any type of memory. By way of example only, the memory 704 can be implemented as random access memory, read-only memory, Flash memory, removable memory, other types of storage elements, or combinations of such devices.

In various embodiments, the display 708 provides a graphical output, for example associated with an operating system, user interface, and/or applications of the electronic device 700 (e.g., a chat user interface, an issue-tracking user interface, an issue-discovery user interface, etc.). In one embodiment, the display 708 includes one or more sensors and is configured as a touch-sensitive (e.g., single-touch, multi-touch) and/or force-sensitive display to receive inputs from a user. For example, the display 708 may be integrated with a touch sensor (e.g., a capacitive touch sensor) and/or a force sensor to provide a touch- and/or force-sensitive display. The display 708 is operably coupled to the processing unit 702 of the electronic device 700.

The display 708 can be implemented with any suitable technology, including, but not limited to, liquid crystal display (LCD) technology, light emitting diode (LED) technology, organic light-emitting display (OLED) technology, organic electroluminescence (OEL) technology, or another type of display technology. In some cases, the display 708 is positioned beneath and viewable through a cover that forms at least a portion of an enclosure of the electronic device 700.

In various embodiments, the input devices 706 may include any suitable components for detecting inputs. Examples of input devices 706 include light sensors, temperature sensors, audio sensors (e.g., microphones), optical or visual sensors (e.g., cameras, visible light sensors, or invisible light sensors), proximity sensors, touch sensors, force sensors, mechanical devices (e.g., crowns, switches, buttons, or keys), vibration sensors, orientation sensors, motion sensors (e.g., accelerometers or velocity sensors), location sensors (e.g., global positioning system (GPS) devices), thermal sensors, communication devices (e.g., wired or wireless communication devices), resistive sensors, magnetic sensors, electroactive polymers (EAPs), strain gauges, electrodes, and so on, or some combination thereof. Each input device 706 may be configured to detect one or more particular types of input and provide a signal (e.g., an input signal) corresponding to the detected input. The signal may be provided, for example, to the processing unit 702.

As discussed above, in some cases, the input device(s) 706 include a touch sensor (e.g., a capacitive touch sensor) integrated with the display 708 to provide a touch-sensitive display. Similarly, in some cases, the input device(s) 706 include a force sensor (e.g., a capacitive force sensor) integrated with the display 708 to provide a force-sensitive display.

The output devices 710 may include any suitable components for providing outputs. Examples of output devices 710 include light emitters, audio output devices (e.g., speakers), visual output devices (e.g., lights or displays), tactile output devices (e.g., haptic output devices), communication devices (e.g., wired, or wireless communication devices), and so on, or some combination thereof. Each output device 710 may be configured to receive one or more signals (e.g., an output signal provided by the processing unit 702) and provide an output corresponding to the signal.

In some cases, input devices 706 and output devices 710 are implemented together as a single device. For example, an input/output device or port can transmit electronic signals via a communications network, such as a wireless and/or wired network connection. Examples of wireless and wired network connections include, but are not limited to, cellular, Wi-Fi, Bluetooth, IR, and Ethernet connections.

The processing unit 702 may be operably coupled to the input devices 706 and the output devices 710. The processing unit 702 may be adapted to exchange signals with the input devices 706 and the output devices 710. For example, the processing unit 702 may receive an input signal from an input device 706 that corresponds to an input detected by the input device 706. The processing unit 702 may interpret the received input signal to determine whether to provide and/or change one or more outputs in response to the input signal. The processing unit 702 may then send an output signal to one or more of the output devices 710, to provide and/or change outputs as appropriate.

As used herein, the phrase "at least one of" preceding a series of items, with the term "and" or "or" to separate any of the items, modifies the list as a whole, rather than each member of the list. The phrase "at least one of" does not require selection of at least one of each item listed; rather, the phrase allows a meaning that includes at a minimum one of any of the items, and/or at a minimum one of any combination of the items, and/or at a minimum one of each of the items. By way of example, the phrases "at least one of A, B, and C" or "at least one of A, B, or C" each refer to only A, only B, or only C; any combination of A, B, and C; and/or one or more of each of A, B, and C. Similarly, it may be appreciated that an order of elements presented for a conjunctive or disjunctive list provided herein should not be construed as limiting the disclosure to only that order provided.

One may appreciate that although many embodiments are disclosed above, that the operations and steps presented with respect to methods and techniques described herein are meant as exemplary and accordingly are not exhaustive. One may further appreciate that alternate step order or fewer or additional operations may be required or desired for particular embodiments.

Although the disclosure above is described in terms of various exemplary embodiments and implementations, it should be understood that the various features, aspects, and functionality described in one or more of the individual embodiments are not limited in their applicability to the particular embodiment with which they are described, but instead can be applied, alone or in various combinations, to one or more of the some embodiments of the invention, whether or not such embodiments are described, and whether or not such features are presented as being a part of a described embodiment. Thus, the breadth and scope of the present invention should not be limited by any of the above-described exemplary embodiments but is instead defined by the claims herein presented.

Furthermore, the foregoing examples and description of instances of purpose-configured software, whether accessible via API as a request-response service, an event-driven service, or whether configured as a self-contained data processing service are understood as not exhaustive. In other words, a person of skill in the art may appreciate that the various functions and operations of a system such as described herein can be implemented in a number of suitable ways, developed leveraging any number of suitable libraries, frameworks, first or third-party APIs, local or remote databases (whether relational, NoSQL, or other architectures, or a combination thereof), programming languages, software design techniques (e.g., procedural, asynchronous, event-driven, and so on or any combination thereof), and so on. The various functions described herein can be implemented in the same manner (as one example, leveraging a common language and/or design), or in different ways. In many embodiments, functions of a system described herein are implemented as discrete microservices, which may be containerized or executed/instantiated leveraging a discrete virtual machine, which are only responsive to authenticated API requests from other microservices of the same system. Similarly, each microservice may be configured to provide data output and receive data input across an encrypted data channel. In some cases, each microservice may be configured to store its own data in a dedicated encrypted database; in others, microservices can store encrypted data in a common database; whether such data is stored in tables shared by multiple microservices or whether microservices may leverage independent and separate tables/schemas can vary from embodiment to embodiment. As a result of these described and other equivalent architectures, it may be appreciated that a system such as described herein can be implemented in a number of suitable ways. For simplicity of description, many embodiments that follow are described in reference to an implementation in which discrete functions of the system are implemented as discrete microservices. It is appreciated that this is merely one possible implementation.

In addition, it is understood that organizations and/or entities responsible for the access, aggregation, validation, analysis, disclosure, transfer, storage, or other use of private data such as described herein will preferably comply with published and industry-established privacy, data, and network security policies and practices. For example, it is understood that data and/or information obtained from remote or local data sources, only on informed consent of the subject of that data and/or information, should be accessed aggregated only for legitimate, agreed-upon, and reasonable uses.

### ADDITIONAL NUMBERED STATEMENTS

1. A computer-implemented method for generating automated actions in a virtual whiteboard graphical user interface of a content collaboration platform, the method comprising:
   causing display of the virtual whiteboard graphical user interface including a collaboration region including a set of user-defined graphical elements containing user-generated content, the set of user-defined graphical elements generated in response to input received from multiple users participating in a whiteboarding session;
   receiving a first user input from a first user of the multiple users designating a user-defined action region within the collaboration region, the user-defined action region associated with an issue tracking platform distinct form the content collaboration platform;
   receiving a second user input from the first user assigning an action to the action region;
   receiving a third user input from the first user selecting a graphical element of a plurality of graphical elements positioned within the collaboration region and dragging the graphical element into the user-defined action region;
   in response to the graphical element being placed within the user-defined action region, extracting content from the graphical element;
   generating a proposed action to be performed with respect to the issue tracking platform;
   causing display of an interface window including a preview of the proposed action;
   in response to a confirmation input, generating an application programming interface (API) command including at least a portion of the extracted content and an API action corresponding to the action assigned to the action region; and
   causing the API command to be processed by the issue tracking platform.
2. The computer-implemented method of statement 1, wherein:
   the action assigned to the action region is an issue creation action;
   the graphical element is a virtual note element, and the user-generated content is text created on the virtual note element;
   the extracted content includes at least one of an issue description, an issue title, or an issue assignee; and
   the API command causes a new issue to be created by the issue tracking platform, the new issue including an attribute that includes the at least one of the issue description, the issue title, or the issue assignee.
3. The computer-implemented method of statement 1, wherein:
   the action assigned to the action region is an issue modification action; and
   in response to the graphical element being placed within the user-defined action region, the method further comprises:
      identifying an issue of the issue tracking platform that corresponds to the graphical element; and
      identifying the issue comprises performing a structured query on the issue tracking platform using the extracted content.
4. The computer-implemented method of statement 3, wherein the interface window includes data returned from the structured query.
5. The computer-implemented method of statement 1, wherein:
   the interface window includes a set of user-editable fields;
   the set of user-editable fields include at least two of more of:
      an issue identifier;
      an assignee of the issue;
      a reporter of the issue
      an issue task; or
      a project associated with the issue.
6. The computer-implemented method of statement 5, wherein text corresponding to the reporter of issue is automatically populated in a respective field of the interface window.
7. The computer-implemented method of statement 5, wherein:
   the project associated with the issue is automatically populated in the interface window based on a structured query performed on the issue tracking platform:
   the structured query including content extracted from the graphical element.
8. The computer-implemented method of statement 1, wherein:
   the action assigned to the action region is an issue search action;
   in response to the graphical element being placed within the user-defined action region, the method further comprises performing a structured query on the issue tracking platform using the extracted content; and
   search results returned by the structured query are displayed in a second interface window.
9. The computer-implemented method of statement 1, wherein:
   in response to multiple graphical elements being placed within the user-defined action region:
   extracting content from each of the multiple graphical elements; and
   generating at least one API command using the content extracted from each of the multiple graphical elements.
10. The computer-implemented method of statement 1, wherein:
   the designated area is a first designated area;
   the virtual whiteboard graphical user interface further comprising a second designated area; and
   an action to be performed on the graphical element in response to being dragged to the first designated area or the second designated area is configurable by a participant user of the whiteboarding session or a host user of the whiteboarding session.
11. A computer-implemented method for generating automated actions in a virtual whiteboard graphical user interface of a content collaboration platform, the method comprising:
   causing display of the virtual whiteboard graphical user interface including a collaboration region including a set of user-defined graphical elements containing user-generated content, the set of user-defined graphical elements generated in response to input received from multiple users participating in a whiteboarding session;
   receiving a first user input from a first user of the multiple users designating an action region within the collaboration region, the action region associated with an issue tracking platform distinct form the content collaboration platform;
   receiving a second user input from the first user selecting a graphical element of a plurality of graphical elements positioned within the collaboration region and dragging the graphical element into the action region;
   in response to the graphical element being placed within the action region, extracting content from the graphical element;
   causing display of an interface window including a preview of the extracted content;
   in response to a confirmation input, generating an application programming interface (API) command including at least a portion of the extracted content and an API action corresponding to the action associated with the action region; and
   causing the API command to be processed by the issue tracking platform.
12. The computer-implemented method of statement 11, wherein:
   in response to multiple graphical elements being placed within the action region:
   extracting content from each of the multiple graphical elements; and
   generating at least one API command using the content extracted from each of the multiple graphical elements
13. The computer-implemented method of statement 11, wherein:
   the action associated with the action region is an issue state change action;
   in response to the graphical element being placed within the user-defined action region, a structured query is generated using the extracted content;
   the method further comprises executing the structured query on a data store of the issue tracking platform to identify an issue object; and
   the API command is generated to effectuate a state change of the issue object in the issue tracking platform.
14. The computer-implemented method of statement 11, wherein:
   the action associated with the action region is an issue creation action;
   the API command is generated to cause the creation of a new issue in the issue tracking platform, the new issue defined, at least in part, using the extracted content.
15. The computer-implemented method of statement 11, wherein:
   the action region is a user-defined region having a size and shape designated in accordance with a region-creation user input; and
   the action associated with the action region is designated in response to user input.
16. A computer-implemented method for generating automated actions in a virtual whiteboard graphical user interface of a content collaboration platform, the method comprising:
   causing display of the virtual whiteboard graphical user interface including a collaboration region including a set of user-defined graphical elements containing user-generated content, the set of user-defined graphical elements generated in response to input received from multiple users participating in a whiteboarding session;
   receiving a first user input from a first user of the multiple users designating a user-defined action region within the collaboration region, the user-defined action region associated with a content management service of the content collaboration platform;
   receiving a second user input from the first user assigning an action to the action region;
   receiving a third user input from the first user selecting a graphical element of a plurality of graphical elements positioned within the collaboration region and dragging the graphical element into the user-defined action region;
   in response to the graphical element being placed within the user-defined action region, extracting content from the graphical element;
   generating a proposed action to be performed with respect to the content management service;
   causing display of an interface window including a preview of the proposed action; and
   in response to a confirmation input, performing the action assigned to the action region.
17. The computer-implemented method of statement 16, wherein:
   the user-defined action region is configured to generate a single page based on the user-generated content extracted from a plurality of graphical elements moved into the user-defined action region; and
   a layout of the single page is determined based on a relative position of each graphical element in the user-defined action region.
18. The computer-implemented method of statement 16, wherein the user-defined action region is configured to:
   identify an existing page using at least a part of the user-generated content extracted from a graphical element moved into the user-defined action region; and
   update the identified page with the user-generated content extracted from a graphical element moved into the user-defined action region.
19. The computer-implemented method of statement 16, wherein the user-defined action region is configured to:
   identify an existing page using at least a part of the user-generated content extracted from a graphical element moved into the user-defined action region; and
   create an action item for performing on the identified existing page.
20. The computer-implemented method of statement 16, wherein the user-defined action region is configured to:
   identify an existing page using at least a part of the user-generated content extracted from a graphical element moved into the user-defined action region; and
   update a decision corresponding to the identified existing page.
21. A computer-implemented method comprising:
   causing display of a graphical user interface of a whiteboarding application instance on a client device, the graphical user interface of the whiteboarding application instance including a multi-user editable region configured to contemporaneously receive one or more object creation commands from one or more client devices operably coupled to a whiteboarding service platform executing on a whiteboarding backend;
   in response to a first user input, creating an automation primitive region within the graphical user interface of the whiteboarding application instance;
   in response to a second user input, causing display of a first automation interface user interface (UI) including an option to select a platform from a set of multiple platforms;
   in response to a selection of a particular platform from the set of multiple platforms, querying an integration registry, and obtaining an integration of a set of integrations corresponding to the particular platform;
   in accordance with the obtained integration corresponding to the particular platform, obtaining a set of integration fields;
   generating and causing display of a second automation interface UI having a set of regions corresponding to at least a subset of the set of integration fields;
   receiving an input at the second automation interface UI;
   in accordance with the received input at the second automation interface UI, associating the integration with the automation primitive region; and
   in response to a graphical element corresponding to an object dragged into the automation primitive region, causing performance of an automation with respect to the particular platform.
22. The computer-implemented method of statement 21, wherein:
   the set of multiple platforms including a first platform associated with an issue management system, and the integration registry including an issue creation integration causing creation of a new issue managed by the issue management system in response to the graphical element dragged and dropped in the automation primitive region, the new issue created based on content of the graphical element dragged and dropped in the automation primitive region; or
   the set of multiple platforms including a second platform associated with a document management system, and the integration registry including a document editing integration causing a document managed by managed by the document management system being updated in accordance with the content of the graphical element dragged and dropped in the automation primitive region.
23. The computer-implemented method of statement 22, wherein:
   the obtained integration corresponding to the particular platform comprises the issue creation integration configured to:
   search an issue in accordance with the content of the graphical element dragged and dropped in the automation primitive region;
   upon determining that the issue exists, update the issue in accordance with the content of the graphical element dragged and dropped in the automation primitive region; and
   upon determining that the issue does not exist, create the issue in accordance with the content of the graphical element dragged and dropped in the automation primitive region.
24. The computer-implemented method of statement 22, further comprising:
   in accordance with the obtained integration corresponding to the particular platform comprising the issue creation integration, validating whether a user of the client device is an authenticated user of the issue management system;
   upon determining that the user of the client device is an unauthenticated user of the issue management system, causing display of an authentication interface to receive user authentication credentials; and
   in response to a successful authentication of the user of the client device using the received user authentication credentials, obtaining the set of integration fields for associating the integration with the automation primitive region.
25. The computer-implemented method of statement 21, wherein the causing performance of the automation with respect to the particular platform comprises:
   checking whether one or more tasks identified based on content of the graphical element dragged and dropped in the automation primitive region can be performed through the automation; and
   performing the automation with respect to a subset of the one or more tasks that can be performed through the automation.
26. The computer-implemented method of statement 25, further comprising:
   visually distinguishing each task of the one or more tasks and the graphical element that cannot be performed through the automation.
27. The computer-implemented method of statement 21, wherein the causing performance of the automation with respect to the particular platform comprises:
   causing display of the graphical element dragged and dropped in the automation primitive region, the graphical element including a smart-link, the smart-link is a selectable graphical object displaying data extracted from an object managed by the particular platform upon selection of the selectable graphical object by a user of the client device.
28. The computer-implemented method of statement 27, further comprising:
   in response to the user of the client device dragging and dropping the graphical element outside of the automation primitive region, causing display of the graphical element including the smart-link outside of the automation primitive region.
29. The computer-implemented method of statement 21, wherein:
   the automation primitive region is a first automation primitive region; and
   the graphical user interface of the whiteboarding application instance further including a second automation primitive region linked with the first automation primitive region.
30. The computer-implemented method of statement 29, further comprising:
   causing performance of a second automation with respect to the particular platform in response to the graphical element dragged from the first automation primitive region and dropped into the second automation primitive region.
31. The computer-implemented method of statement 29, wherein:
   the first automation primitive region corresponds with a first platform of the set of multiple platforms;
   the second automation primitive region corresponds with a second platform of the set of multiple platform; and
   the second platform is different from the first platform.
32. A computer-implemented method comprising:
   causing display of a whiteboarding application interface instance on a client device, the whiteboarding application interface instance including a multi-user editable region configured to contemporaneously receive one or more object creation commands from one or more client devices operably coupled to a whiteboarding service platform executing on a whiteboarding backend;
   in response to a first user input, defining a portion of the multi-user editable region as an automation primitive region;
   querying an integration registry to identify a particular integration of a set of integrations corresponding to a number of platforms;
   in accordance with the identified particular integration corresponding to a platform of the number of platforms, causing display of an automation interface user interface (UI) having a set of fields, the set of fields corresponds to the particular integration;
   in accordance with user inputs corresponding to the set of fields, associating the particular integration with the automation primitive region; and
   in response to a graphical element corresponding to an object dragged into the automation primitive region, causing modification of content of the graphical element using an application programming interface (API) call to the platform.
33. The computer-implemented method of statement 32, wherein:
   the automation primitive region is a first automation primitive region;
   the platform is a first platform of the number of platforms; and
   the method further comprising:
      in response to a second user input, defining another portion of the multi-user editable region as a second automation primitive region associated with a second platform of the number of platforms, the second platform is different from the first platform.
34. The computer-implemented method of statement 33, wherein:
   the second automation primitive region and the first automation primitive region are linked with each other;
   the first platform corresponds to a document management system;
   the second platform corresponds to an issue management system;
   the modification of the content of the graphical element comprises inserting and displaying a smart-link as the content of the graphical element, the smart-link is a selectable graphical object displaying data extracted from an object managed by the first platform upon selection of the selectable graphical object by a user of the client device; and
   the method further comprising:
      causing modification of content of another graphical element positioned in the second automation primitive region using an application programming interface (API) call to the second platform to insert the smart-link to an issue managed by the issue management system.
35. The computer-implemented method of statement 33, wherein:
   the second automation primitive region and the first automation primitive region are linked with each other;
   the first platform corresponds to an issue management system;
   the second platform corresponds to a document management system;
   the modification of the content of the graphical element comprises inserting and displaying a smart-link as the content of the graphical element, the smart-link is a selectable graphical object displaying data extracted from an object managed by the first platform upon selection of the selectable graphical object by a user of the client device; and
   the method further comprising:
      causing modification of content of another graphical element positioned in the second automation primitive region using an application programming interface (API) call to the second platform to insert the smart-link to a document managed by the document management system.
36. A computer-implemented method comprising:
   causing display of a whiteboarding application interface instance on a client device, the whiteboarding application interface instance including a multi-user editable region and an action region, the multi-user editable region and the action region configured to contemporaneously receive one or more object creation commands from one or more client devices operably coupled to a whiteboarding service platform executing on a whiteboarding backend;
   in response to a graphical element of a set of user-defined graphical elements positioned within the multi-user editable region being dragged and dropped into the action region, extracting content from the graphical element dropped into the action region;
   based on the extracted content, formulating, and causing execution of, an application programming interface (API) command to perform an action on an issue management system; and
   in accordance with an execution status of the API command, updating and displaying of content of the graphical element placed within the action region, the updated content of the graphical element including a smart-link corresponding to an issue managed by the issue management system, wherein
   the smart-link is a selectable graphical object displaying data extracted from an object managed by the issue management system upon selection of the selectable graphical object by a user of the client device.
37. The computer-implemented method of statement 36, further comprising:
   based on the extracted content, identifying a current user of the issue management system, and a current project associated with the graphical element; and
   causing execution of the API command on the issue management system with respect to the identified current user and the current project.
38. The computer-implemented method of statement 37, further comprising:
   prior to execution of the API command to perform, validating whether the identified current user of the issue management system is an authenticated user of the issue management system;
   upon determining that the identified current user of is an unauthenticated user of the issue management system, causing display of an authentication interface to receive user authentication credentials;
   in response to a successful authentication of the identified current user using the received user authentication credentials, causing execution of the API command; and
   in response to an unsuccessful authentication of the identified current user using the received user authentication credentials, displaying an error notification on the whiteboarding application interface instance.
39. The computer-implemented method of statement 36, further comprising
   causing display of a user input interface to receive inputs corresponding to one or more fields of a set of input fields required for formulating the API command.
40. The computer-implemented method of statement 36, further comprising:
   in response to detecting a user cursor in a predefined proximity of the displayed graphical element in the action region, causing display of one or more parameters associated with the object managed by the issue management system as an overlay window over the graphical element displayed in the action region.

## Claims

1. A computer-implemented method for generating automated actions in a virtual whiteboarding application, the method comprising:
causing display of a virtual whiteboard graphical user interface including a virtual canvas;
causing display of a set of user-defined graphical objects within the virtual canvas, the set of user-defined graphical objects generated in response to input received from multiple users participating in a whiteboarding session;
receiving a first user input from a first user of the multiple users generating an automation primitive defining an automation region within the virtual canvas;
receiving a second user input from the first user assigning an action to the automation primitive, the action associated with an external platform;
receiving a third user input from the first user moving a particular user-generated graphical object within the virtual canvas into the automation region;
in response to the particular user-generated graphical object being placed within the automation region, extracting content from the particular user-generated graphical object;
generating an application programming interface (API) command including at least a portion of the extracted content and an API action corresponding to the action assigned to the action region; and
causing the API command to be executed on the external platform.

2. The computer-implemented method of claim 1, wherein:
the external platform is an issue tracking platform;
the action assigned to the automation region is an issue creation action; and
the extracted content includes at least one of an issue description, an issue title, or an issue assignee.

3. The computer-implemented method of claim 2, wherein:
the API command causes a new issue to be created by the issue tracking platform; and
the new issue includes an attribute that includes the at least one of the issue description, the issue title, or the issue assignee.

4. The computer-implemented method of claim 2 or claim 3, wherein:
the action assigned to the action region is an issue modification action; and
in response to the particular graphical object being placed within the automation region, the method further comprises, identifying an issue of the issue tracking platform by performing a structured query on the issue tracking platform using the extracted content.

5. The computer-implemented method of any preceding claim, wherein:
the API command causes a new object to be created on the external platform;
in response the creation of the new object on the external platform, the particular graphical object is replaced with a selectable graphical object; and
the selectable graphical object includes data extracted from the new object and is selectable to cause redirection to a graphical user interface of the external platform depicting content of the new object.

6. The computer-implemented method of any preceding claim, wherein:
in response to moving the particular user-generated graphical object into the automation region, causing display of an interface window; and
the interface window includes a set of user-editable fields including at least two of more of:
an issue identifier;
an assignee of an issue;
a reporter of the issue;
an issue task; or
a project associated with the issue.

7. The computer-implemented method of claim 6, wherein the user-editable field for the reporter of the issue is automatically populated with a name corresponding to the first user causing movement of the particular graphical object into the automation region.

8. The computer-implemented method of claim 6 or claim 7, wherein:
the project associated with the issue is automatically populated based on a structured query performed on the issue tracking platform; and
the structured query includes content extracted from the particular user-generated graphical object.

9. A computer-implemented method for generating automated actions in a virtual whiteboard application, the method comprising:
causing display of a virtual canvas in a virtual whiteboard graphical user interface on a client device operably coupled to a whiteboard backend operating on a server;
causing display of a set of user-defined graphical objects generated in response to input provided by multiple users concurrently operably coupled to the whiteboard backend;
receiving a first user input from a first user of the multiple users causing generation of an automation primitive defining an automation region within the virtual canvas;
receiving a second user input from the first user assigning an action to the automation primitive;
receiving a third user input from the first user selecting a particular graphical object of the set of graphical objects and dragging the particular graphical object into the automation region;
in response to the particular graphical object being placed within the automation region, extracting content from the particular graphical object; and
causing an automated action to be performed with respect to the graphical object using the extracted content.

10. The computer-implemented method of claim 9, wherein:
the automated action is an application programming interface (API) command to an external platform; and
the API command includes the extracted content.

11. The computer-implemented method of claim 10, wherein:
the external platform is an issue tracking platform; and
the API command is configured to create a new issue in the issue tracking platform using the extracted content.

12. The computer-implemented method of claim 10, wherein:
the external platform is an issue tracking platform;
the API command is configured to identify an existing issue using the extracted content; and
the particular graphical object is modified to include content extracted from the existing issue of the issue tracking platform.

13. The computer-implemented method of claim 10, wherein:
the external platform is an issue tracking platform;
in response to the particular graphical object being placed within the automation region, a structured query to the issue tracking platform is executed using the extracted content to identify an existing issue of the issue tracking platform; and
the API command causes a change of a state of the existing issue in the issue tracking platform.

14. The computer-implemented method of any of claims 9 to 13, wherein:
in response to multiple graphical objects being placed within the automation region:
extracting content from each of the multiple graphical objects; and
generating at least one application programming interface command using the content extracted from each of the multiple graphical objects.

15. The computer-implemented method of any of claims 9 to 14, wherein each graphical object of the set of graphical objects is a virtual note object having user-generated text content.
